(19) Europäisches Patentamt
European Patent Office
Office européen des brevets

(11) EP 2 963 086 B1

(12) **EUROPEAN PATENT SPECIFICATION**

(45) Date of publication and mention of the grant of the patent:
**28.02.2018 Bulletin 2018/09**

(21) Application number: **14757331.5**

(22) Date of filing: **28.02.2014**

(51) Int Cl.:
***B60C 1/00*** *(2006.01)*
***C08C 19/25*** *(2006.01)*
***C08F 236/10*** *(2006.01)*
***C08K 3/34*** *(2006.01)*
***C08L 9/06*** *(2006.01)*
***C08L 15/00*** *(2006.01)*
***C08L 23/22*** *(2006.01)*

(86) International application number:
**PCT/JP2014/001114**

(87) International publication number:
**WO 2014/132666 (04.09.2014 Gazette 2014/36)**

(54) **RUBBER COMPOSITION, INNER LINER MATERIAL, AND PNEUMATIC TIRE**

KAUTSCHUKZUSAMMENSETZUNG, INNENVERKLEIDUNGSMATERIAL UND LUFTREIFEN

COMPOSITION DE CAOUTCHOUC, MATÉRIAU DE REVÊTEMENT INTÉRIEUR, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 JP 2013039889**
**26.04.2013 JP 2013094073**

(43) Date of publication of application:
**06.01.2016 Bulletin 2016/01**

(73) Proprietor: **Bridgestone Corporation**
**Tokyo 104-8340 (JP)**

(72) Inventor: **YANAGISAWA, Aya**
**Kodaira-shi**
**Tokyo 187-8531 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**WO-A1-2006/039942**
**WO-A1-2007/062669**
**JP-A- H11 228 762**
**JP-A- 2000 159 937**
**JP-A- 2003 335 902**
**JP-A- 2004 149 682**
**JP-A- 2004 204 204**
**JP-A- 2005 097 497**
**JP-A- 2005 187 583**
**JP-A- 2005 187 584**
**JP-A- 2006 257 283**
**JP-A- 2007 056 145**
**JP-A- 2008 144 041**
**JP-A- 2008 516 825**
**JP-A- 2011 132 516**
**JP-A- 2012 246 429**
**JP-A- 2013 018 914**
**US-A1- 2003 191 224**
**US-A1- 2007 015 858**

- **ALEXANDRE M ET AL: "Polymer-layered silicate nanocomposites: preparation, properties and uses of a new class of materials", MATERIALS SCIENCE AND ENGINEERING R: REPORTS, ELSEVIER SEQUOIA S.A., LAUSANNE, CH, vol. 28, no. 1-2, 1 June 2000 (2000-06-01) , pages 1-63, XP004205143, ISSN: 0927-796X, DOI: 10.1016/S0927-796X(00)00012-7**
- **A. AKELAH ET AL: "Organophilic rubber-montmorillonite nanocomposites", MATERIALS LETTERS, vol. 22, no. 1-2, 1 January 1995 (1995-01-01), pages 97-102, XP055226756, NL ISSN: 0167-577X, DOI: 10.1016/0167-577X(94)00167-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This disclosure relates to a rubber composition, an inner liner material, and a pneumatic tire.

### BACKGROUND

Rubber compositions containing a layered compound are known for their improved material properties, which is achieved by separating the layers (nanosheets with high aspect ratio) composing the layered compound and dispersing the separated layers in the rubber composition. However, the layers of the layered compound are generally not readily separated due to the attracting force of electric charges between the layers, resulting in poor dispersibility of the layers in the rubber composition.

To solve this problem, for example, Patent Literature 1 (PTL 1) proposes a rubber composition that contains a complex and a solid rubber, in which the complex is composed of a liquid rubber having positively charged groups and a layered silicate (dispersed in the liquid rubber). PTL 1 reports that such a rubber composition has superior mechanical characteristics, oil resistance, fatigue resistance, and processability. However, it is not always easy to prepare the liquid rubber that incorporates onium ions as positively charged groups as described in PTL 1. Moreover, even if technique of PTL 1 is successfully employed, swelling between the layers of the layered compound, and therefore the separation of the layers of the layered compound, is often insufficient, which may often lead to the failure to provide expected physical properties.

On the other hand, a nanocomposite of the polymer/layered compound, which is a complex in which two types of polymers with different molecular weight are mixed with an organized layered compound, is known to have better material properties such as the air impermeability than a complex containing no organized layered compound, because the nanosheets with high aspect ratios are dispersed in the polymer due to layer separation (for example, see PLT 2). Also, there is known a resin composite material for a sheet that features being formed of two or more types of polyolefin polymers and organized cray, where at least one type of the polyolefin polymer has a functional group (for example, see PLT 3).

However, there has currently been problems such as, regardless of the use of the techniques according to the PLT 2 and the PLT 3 described above, since rubbers such as butyl rubber having low air permeability have low polarity and great molecular weight, simply blending and kneading the organized layered compound hardly achieves the intercalation of the rubber component and the like between the layers of the layered compound and, as a result, each layer of the layered compound does not separate and an aspect ratio of the layered compound does not become improved, inhibiting demonstration of an intended effect.

### CITATION LIST

#### Patent Literature

PTL 1: JPH1-198645A

PTL 2: U.S. Patent No. 6034164

PTL 3: JPH11-181190A

### SUMMARY

#### (Technical Problem)

The products disclosed herein have been produced in view of the above situations. It could be helpful to provide a rubber composition having superior gas-barrier properties, an inner liner material as the material of an inner liner having superior gas-barrier properties, and a pneumatic tire that ensures superior retainability of the gas filled therein, by improving the separability of the layers composing the layered compound in the rubber composition.

(Solution to Problem)

The product disclosed herein for achieving the above objects mainly features the following.

That is, the rubber composition disclosed herein contains a layered compound and a modified conjugated diene-based polymer having a functional group that interacts with the layered compound.

(Advantageous Effect)

According to the disclosure, provided is a rubber composition having superior gas-barrier properties, an inner liner material as the material of an inner liner having superior gas barrier properties, and a pneumatic tire that ensures superior retainability of the gas filled therein.

DETAILED DESCRIPTION

Hereinafter, the disclosed products will be described in detail by illustrating embodiments. The disclosed rubber composition contains a layered compound and a modified conjugated diene-based polymer having a functional group that interacts with the layered compound.

<Layered Compound>

The layered compound disclosed herein includes a layered clay mineral, layered polysilicate, and zirconium phosphate. Examples of the layered clay mineral include kaolin mineral, serpentine, pyrophyllite-talc, mica, chlorite, smectite, and vermiculite.

Examples of the kaolin mineral include kaolinite, dickite, nacrite, and halloysite.

Examples of the serpentine include chrysotile, lizardite, and antigorite.

Examples of the pyrophyllite-talc include pyrophyllite, talc, kerolite, willemseite, pimelite, and minnesotaite.

Mica is a rhombic layered silicate characterized by a perfect base cleavage, and its general chemical composition is represented by the following formula:

$$XY_{2\text{-}3}Z_4O_{10}(OH, F)_2$$

(where X represents one of Ba, Ca, ($H_3O$), K, Na, or ($NH_4$), Y represents one of Al, $Cr^{3+}$, $Fe^{2+}$, $Fe^{3+}$, Li, Mg, $Mn^{2+}$, or $V^{3+}$, and Z represents one of Al, Be, Fe, or Si.) Either natural mica or synthesized mica may be used. Examples of the mica include white mica, gold mica, black mica, and fluorine gold mica.

Examples of the chlorite include clinochlore (Mg chlorite), FeMg chlorite, chamosite (Fe chlorite), nimite, pennantite, donbassite, sudoito, and cookeite.

Examples of the smectite include montmorillonite, beidellite, nontronite, saponite, hectorite, and stevensite. Smectite is a clay mineral containing a substance represented by the following formula:

$$[Si_8(Mg_aLi_b)O_{20}OH_cF_{4\text{-}c}]^{-x}Na^{+x}$$

(where the letters a, b, c, and x satisfy the relations $0<a\leq6$, $0<b\leq6$, $4<a+b<8$, $0\leq c<4$, $x=12-2a-b$.) The clay mineral may be a natural material or a synthetic material, or may be a clay mineral having been subjected to lipophilization.

Examples of the layered polysilicate include magadiite, kanemite, and kenyaite.

Of the layered compounds, to improve the gas-barrier properties of the rubber composition, kaolin mineral, serpentine, pyrophyllite-talc, mica, chlorite, smectite, and vermiculite are preferred. Further, montmorillonite, mica, vermiculite, beidellite, nontronite, saponite, hectorite, stevensite having a two-to-one structure are more preferred. These layered compounds having a two-to-one structure have exchangeable cations between the layers, which further improves separability of the layers of the layered compound. This consequently results in further improvement in the gas-barrier properties of the disclosed rubber composition. Of these layered compounds, considering the separability of the layers thereof, montmorillonite and mica are particularly preferred.

The layered compound disclosed herein is preferably organized with an organizing agent. When organized, the layered compound may increase its compatibility with the rubber component. Further, the organized layered compound may increase an interlayer distance of the layered compound, allowing the modified conjugated diene-based polymer, which will be described later, to readily enter a gap between the layers of the layered compound. This will consequently further improve the gas-barrier properties of the disclosed rubber composition. Here, the preferred organizing agent contains at least one kind of onium cation selected from the group consisting of ammonium cations, phosphonium cations, oxonium cations, and sulfonium cations, considering the improvement in the gas-barrier properties of

the rubber composition. Specifically, salts containing the above cations are preferred as the organizing agent.

The particularly preferred organizing agent for the disclosed products are those that contain at least one of the quaternary ammonium cations having the structure shown by the formula (1) below and those that contain the quaternary phosphonium cations having the structure shown by the formula (2) below, considering the above-mentioned effects of the organizing agent.

[Chemical Formula 1]

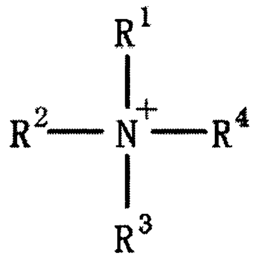

・・・(1)

[Chemical Formula 2]

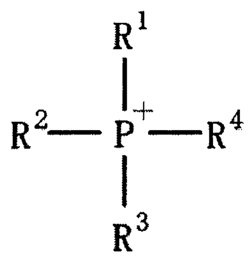

・・・(2)

In the chemical formulae (1) and (2), $R^1$ to $R^4$ each independently represent an aryl group such as a benzyl group, an alkyl group having a carbon number of 1 to 30, a $(CH_2CH(CH_3)O)_nH$ group, or a $(CH_2CH_2O)_nH$ group, where n represents an integer of 1 to 50.

Examples of the quaternary ammonium salt containing the quaternary ammonium cations of formula (1) include polyoxypropylene trialkyl ammonium chloride, polyoxypropylene trialkyl ammonium bromide, di(polyoxypropylene)dialkyl ammonium chloride, di(polyoxypropylene)dialkyl ammonium bromide, tri(polyoxypropylene)alkyl ammonium chloride, tri(polyoxypropylene)alkyl ammonium bromide.

Examples of the quaternary phosphonium salt containing the quaternary phosphonium cations of formula (2) include aryl tri-n-butyl phosphonium bromide, benzyl tri-n-butyl phosphonium chloride, benzyl triethyl phosphonium chloride, dodecyl tri-n-butyl phosphonium bromide, dodecyl tri-n-butyl phosphonium chloride, ethyl tri-n-octyl phosphonium bromide, hexadecyl tri-n-butyl phosphonium bromide, hexadecyl tri-n-butyl phosphonium chloride, hexadecyl tri-n-butyl phosphonium tetrafluoroborate, methyl tri-n-butyl phosphonium chloride, tetraethylphosphonium bromide, tetra-n-butyl phosphonium chloride, and n-octyl tri-n-butyl phosphonium bromide.

When the layered compound is organized with an organizing agent, a layered compound having swelling properties to water and an organic solvent is preferably used in order to allow, for example, the above quaternary ammonium cations to readily enter the space between the layers of the layered compound. With such a layered compound having swelling properties, the above quaternary ammonium cations may more readily enter the space between the layers, which consequently further improves the separability of the layers composing the layered compound contained in the rubber composition. To allow this effect, mica having a large average grain diameter, particularly swelling mica, is preferably used, among the above-listed layered compounds. A mean grain diameter of the mica is not particularly limited but preferably 3 to 30 μm.

The layered compound may be organized by, for example, dipping the layered compound in an aqueous solution containing onium cations and then washing the layered compound by water to remove excessive onium cations. The content of the above onium cations in the organized layered compound is not particularly limited but is preferably 20 to 60% by mass.

Further, the layered compound preferably has a distance of 12 Å or greater between the layers of the layered compound (hereinafter referred to as "interlayer distance") regardless of whether the layered compound is organized or not. With the interlayer distance of 12 Å or greater, the modified conjugated diene-based rubber, which will be described later, may readily enter the interlayer space. The interlayer distance of the layered compound is not particularly limited

but is typically 40 Å or less. The interlayer distance of the layered compound may be measured by X-ray diffraction.

The rubber composition disclosed herein may contain one kind of the layered compound or a combination of two or more kinds thereof. The content of the layered compound is preferably 1 to 200 parts by mass, more preferably 1 to 100 parts by mass, particularly preferably 3 to 80 parts by mass per 100 parts by mass of a total (rubber component) of the modified conjugated diene-based polymer and the butyl-based rubber, those will be described later. With the content of the layered compound being at least 1 part by mass per 100 parts by mass of the total of the modified conjugated diene-based polymer and the butyl-based rubber, the effect of the disclosed products may be sufficiently obtained, and with the content being no more than 200 parts by mass, the rubber composition demonstrates excellent processability. Note that when the layered compound is organized, the content of the layered compound herein refers to the content of the organized layered compound.

<Modified Conjugated Diene-based Polymer>

The modified conjugated diene-based polymer disclosed herein is obtained by modifying a conjugated diene-based polymer with a modifying agent having a functional group that interacts with the layered compound. In the modified conjugated diene-based polymer disclosed herein, the functional group that interacts with the layered compound presents at least one location selected from a polymerization-initiation-side end, a polymerization-termination-side end, a main chain, and a side chain. The functional group that interacts with the layered compound is not particularly limited but may be a functional group that carries out, with the layered compound, a hydrogen bonding, a van der Waals interaction, and the like. Of these interactions, considering separability of each layer of the layered compound and also the gas-barrier properties of the rubber composition, the hydrogen bonding is preferred. Note that the rubber composition disclosed herein is characteristic in that the polymer itself contains the functional group that interacts with the layered compound. Such a configuration facilitates, in comparison to, for example, a rubber composition containing the layered compound, a low molecular compound (oligomer and the like) having the functional group that interacts with the layered compound and a polymer that does not have the functional group that interacts with the layered compound, intercalation of the polymer (the modified conjugated diene-based polymer herein) between layers of the layered compound more sufficiently and, as a result, may provide excellent dispersibility of each layer of the layered compound in the rubber composition.

Note that the conjugated diene-based polymer used for the modification may be a conjugated diene compound homopolymer, or a copolymer of the conjugated diene compound and an aromatic vinyl compound. As the conjugated diene polymer, polybutadiene (BR) and styrene-butadiene copolymer (SBR) are preferred, and the styrene-butadiene copolymer is particularly preferred.

The functional group that interacts with the layered compound is preferably at least one of a nitrogen-containing functional group or an oxygen-containing functional group. Examples of the nitrogen-containing functional group include a nitrile group, an azo group, an isocyanate group, a substituted or unsubstituted amino group, a substituted or unsubstituted amide groups, a substituted or unsubstituted imino group, a substituted or unsubstituted imidazole group, a substituted or unsubstituted pyridyl group, and a substituted or unsubstituted imide group. Also, examples of the oxygen-containing functional group include an ester group, a ketone group, a substituted or unsubstituted alkoxy group, a substituted or unsubstituted alkoxy silyl group, a substituted or unsubstituted hydroxyl group, a substituted or unsubstituted aldehyde group, and a substituted or unsubstituted carboxyl group. The modified conjugated diene-based polymers having these functional groups are particularly superior in affinity to the layered compound, and may further improve the separability of each layer constituting the layered compound. As a result, the gas-barrier properties of the rubber composition disclosed herein may be further enhanced. Note that the rubber composition disclosed herein may contain the nitrogen-containing functional group containing an oxygen atom or the oxygen-containing functional group containing a nitrogen atom.

Of the functional groups those interact with the layered compound, considering enhancement of the separability and also the gas-barrier properties of the rubber composition, the nitrogen-containing functional group is more preferably one selected from a group composed of the substituted or unsubstituted amino group, the substituted or unsubstituted amide group, and the substituted or unsubstituted imino group, and the oxygen-containing functional group is more preferably the substituted or the unsubstituted alkoxy silyl group. Further, the functional group that interacts with the layered compound described above, considering the enhancement of the separability and the gas-barrier properties described above, is particularly preferably a primary amino group or a secondary amino group.

The modified conjugated diene-based polymer described above preferably is a polymer obtained by anionic polymerization using an organic alkali metal compound as a polymerization initiator, or coordination polymerization using a rare earth metal compound as the polymerization initiator.

Although the polymerization method is not particularly limited but may be any one of solution polymerization, gas phase polymerization, and bulk polymerization, and the solution polymerization is particularly preferred. Also, a polymerization type may be either a batch type or a continuous type.

The conjugated diene-based polymer used in the production of the modified conjugated diene-based polymer

is not particularly limited as long as being typically used in the rubber industry but preferably a homopolymer of the conjugated diene compound or a copolymer of the conjugated diene compound and the aromatic vinyl compound.

Examples of the conjugated diene compound include 1,3-butadiene, isoprene, 1,3-pentadiene, 2,3-dimethyl-1,3-butadiene, 2-phenyl-1,3-butadiene, and 1,3-hexadiene. These may be used alone or in combination of two or more thereof. Of these conjugated diene compounds, 1,3-butadiene, isoprene, and 2,3-dimethyl-1,3-butadiene are particularly preferred.

Also, examples of the aromatic vinyl compound include styrene, α-methyl styrene, 1-vinylnaphthalene, 3-vinyltoluene, ethylvinylbenzene, divinylbenzene, 4-cyclo hexyl styrene, and 2,4,6-trimethyl styrene. These may be used alone or in combination of two or more thereof. Of these aromatic vinyl compounds, styrene is particularly preferred.

In carrying out the copolymerization using the conjugated diene compound and the aromatic vinyl compound as monomers, considering practicality such as readily availability of the monomers and anionic polymerization characteristics superior in terms of living properties, 1,3-butadiene and styrene as the conjugated diene compound and the aromatic vinyl compound, respectively, are particularly preferably used. Also, in using the solution polymerization, the monomer concentration in the solvent is preferably 5 to 50% by mass, more preferably 10 to 30% by mass. For the copolymerization using the conjugated diene compound and the aromatic vinyl compound, the content of the aromatic vinyl compound in a prepared monomer mixture is preferably in a range of over 0% by mass to 55% by mass.

<<Anionic Polymerization>>

A method of obtaining the modified conjugated diene-based polymer described above by anionic polymerization may be, for example, using the organic alkali metal compound as the initiator and polymerizing the conjugated diene compound alone in the organic solvent, or carrying out the anionic polymerization of the conjugated diene compound and the aromatic vinyl compound. Thereby, the modified conjugated diene-based polymer having the functional group that interacts with the layer compound at the polymerization-initiation-side end, the modified conjugated diene-based polymer having the functional group that interacts with the layer compound at the polymerization-termination-side end, or the modified conjugated diene-based polymer having the functional group that interacts with the layer compound at both the polymerization-termination-side end and the polymerization-initiation-side end may be obtained.

As the organic alkali metal compound mentioned above, a hydrocarbyl lithium compound, a lithium amide compound, or Group 1 metal alkoxide is preferably used. The Group 1 metal of the Group 1 metal alkoxide include lithium, sodium, potassium, rubidium, and cesium. When the hydrocarbyl lithium compound is used as the polymerization initiator, the conjugated diene-based polymer having a hydrocarbyl group at the polymerization-initiation-side end and a polymerization active site at the other end may be obtained. On the other hand, when the lithium amide compound is used as the polymerization initiator, the conjugated diene-based copolymer having the nitrogen-containing functional group at the polymerization-initiation-side end and the polymerization active site at the other end may be obtained. Note that an amount of the organic lithium compound such as the hydrocarbyl lithium compound and the lithium amide compound or the Group 1 metal alkoxide serving as the polymerization initiator is preferably in a range of 0.2 to 20 mmol per 100 g of monomers.

Examples of the hydrocarbyl lithium compound mentioned above include ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenyl-butyl lithium, cyclohexyl lithium, cyclopentyl lithium, and a reaction product of diisopropenylbenzene and butyl lithium. Of these hydrocarbyl lithium compounds, alkyl lithium such as ethyl lithium, n-propyl lithium, isopropyl lithium, n-butyl lithium, sec-butyl lithium, tert-octyl lithium, and n-decyl lithium are preferred, and n-butyl lithium is particularly preferred.

As the lithium amide compound mentioned above, when a lithium amide compound represented by a formula: Li-AM [where AM represents a substituted amino group represented by a formula (3) shown below or a cyclic amino group represented by a formula (4) shown below] is used, the modified conjugated diene-based polymer having at least one kind of nitrogen-containing functional group selected from a group composed of the substituted amino group represented by the formula (3) and the cyclic amino group represented by the formula (4) introduced thereto may be obtained. For example, when lithium hexamethylene imide is used, the modified conjugated diene polymer having at least one hexamethylene imine group introduced thereto may be obtained.

[Formula 3]

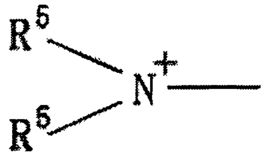

· · · (3)

[Formula 4]

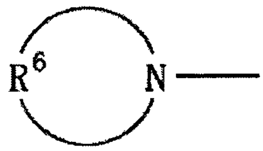

· · · (4)

In the formula (3), $R^5$ represents an alkyl group, an alkenyl group, a cycloalkyl group, a cycloalkenyl group, an aralkyl group, or an alkylsilyl group, having a carbon number of 1 to 18. The $R^5$ preferably represents, for example, a methyl group, an ethyl group, a butyl group, an isobutyl group, an octyl group, a cyclohexyl group, or a 3-phenyl-1-propyl group. Note that these $R^5$ may be the same as or different from each other.

In the formula (4), $R^6$ is an alkylene group, a substituted alkylene group, an oxyalkylene group, or an N- alkyl-amino-alkylene group, having 3 to 16 methylene groups. Here, the substituted alkylene group includes from a monosubstituted alkylene group to an octa-substituted alkylene group, and a substituent may be a linear or branched alkyl group, a cycloalkyl group, a bicycloalkyl group, an aryl group, or an aralkyl group, having a carbon number of 1 to 12. Preferably, the $R^6$ represents a trimethylene group, a tetramethylene group, a hexamethylene group, an oxydiethylene group, an N-alkyl-aza diethylene group, a dodecamethylene group, or a hexa decamethylene group.

Examples of the lithium amide compound having the substituted amino group of the formula (3) set forth above include lithium dimethylamide, lithium diethylamide, lithium di-heptyl amide, lithium dioctyl amide, lithium di-2-ethylhexyl amide, lithium didecyl amide, lithium ethyl propyl amide, lithium ethyl butyl amide, lithium methyl butyl amide, lithium ethyl benzyl amide, and lithium methyl phenethyl amide.

Examples of the lithium amide compound having the cyclic amino group of the formula (4) set forth above include lithium hexamethylene imide, lithium pyrrolidide, lithium piperidide, lithium heptamethylene imide, lithium dodecamethylene imide, and lithium-N-methylpiperazide.

Of these lithium amide compounds, a cyclic lithium amide compound such as lithium hexamethylene imide, lithium pyrrolidide, lithium piperidide, lithium heptamethylene imide, and lithium dodecamethylene imide is preferred, and lithium hexamethylene imide and lithium pyrrolidide are particularly preferred.

The lithium amide compound mentioned above may be pre-prepared from secondary amine and the lithium compound and used for the polymerization, or generated in a polymerization system. Here, the secondary amines include dimethylamine, diethylamine, dibutylamine, dioctylamine, dicyclohexylamine, diisobutylamine, cyclic amines such as azacycloheptane (i.e., hexamethylene imine), 2-(2-ethylhexyl) pyrrolidine, 3-(2-propyl) pyrrolidine, 3,5-bis (2-ethylhexyl) piperidine, 4-phenyl-piperidine, 7-decyl-1-azacyclotridecane, 3,3-dimethyl-1-azacyclotetradecane, 4-dodecyl-1-azacyclooctane, 4-(2-phenyl-butyl)-1-azacyclooctane, 3-ethyl-5-cyclohexyl-1-azacycloheptane, 4-hexyl-1-azacycloheptane, 9-isoamyl-1-azacyclopeptane, 2-methyl-1-azacycloheptadece-9-ene, 3-isobutyl-1-azacyclododecane, 2-methyl-7-t-butyl-1-azacyclododecane, 5-nonyl-1-azacyclododecane, 8-(4'-methyl phenyl)-5-pentyl-3-azabicyclo [5.4.0] undecane, 1-butyl-6-azabicyclo [3.2.1] octane, 8-ethyl-3-azabicyclo [3.2.1] octane, 1-propyl-3-azabicyclo [3.2.2] nonane, 3-(t-butyl)-7-azabicyclo [4.3.0] nonane, and 1,5,5-trimethyl-3-azabicyclo [4.4.0] decane. As the lithium compound, on the other hand, hydrocarbyl lithium described above may be used.

As the organic alkali metal compound as the polymerization initiator mentioned above, alkyl lithium is preferably used. Also, a method of producing, by using the organic alkali metal compound as the polymerization initiator, the modified conjugated diene-based polymer by anionic polymerization is not particularly limited but may be, for example, polymerization of the conjugated diene compound alone in a hydrocarbon solvent inert to a polymerization reaction, or polymerization of a mixture of the conjugated diene compound and the aromatic vinyl compound in the hydrocarbon solvent inert to the polymerization reaction. Here, the hydrocarbon solvent inert to the polymerization reaction may be propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, or ethylbenzene. These may be used alone or in combination of two or more thereof.

The above anionic polymerization may be carried out in the presence of a randomizer. The randomizer may

control a microstructure of the conjugated diene compound. Examples of a function of the randomizer include the control of the 1,2-bond content of a butadiene unit of the polymer using butadiene as a monomer and randomization of the butadiene unit and a styrene unit of the copolymer containing styrene and butadiene as monomers.

Examples of the randomizer include dimethoxybenzene, tetrahydrofuran, dimethoxyethane, diethylene glycol dibutyl ether, diethylene glycol dimethyl ether, bistetrahydrofuryl propane, triethylamine, pyridine, N-methylmorpholine, N,N,N',N'-tetramethylethylenediamine, 1,2-dipiperidinoethane, potassium-t-amylate, potassium-t-butoxide, and sodium-t-amylate. An amount of the randomizer is preferably in a range of 0.01 to 100 mol equivalents per 1 mol of the organic alkali metal compound serving as the polymerization initiator.

The polymerization temperature of the anionic polymerization mentioned above is preferably in a range of 0 to 150°C, more preferably in a range of 20 to 130°C. Also, although the polymerization may be carried out under a generated pressure, typically, the polymerization is preferably carried out under a pressure sufficient to substantially maintain the used monomers in a liquid phase. Here, when the polymerization reaction is carried out under a pressure higher than the generated pressure, the reaction system is preferably pressured with an inert gas. Further preferably, from raw materials used for the polymerization such as the monomer, the polymerization initiator, and the solvents, reaction inhibiting substances such as water, oxygen, carbon dioxide, and a protonic compound are preliminarily removed.

<<Coordination Polymerization>>

On the other hand, when producing the modified conjugated diene-based polymer in coordination polymerization using the rare earth metal compound as the polymerization initiator, a combination of components (A), (B), and (C) described below is preferably used.

The component (A) used for the coordination polymerization mentioned above is selected from the rare earth metal compound or a complex compound of the rare earth metal compound and a Lewis base. Here, the rare earth metal compound may be carboxylic acid salt, alkoxide, a β-diketone complex, phosphoric acid salt, or phosphorous acid salt of a rare earth element. The Lewis base may be acetylacetone, tetrahydrofuran, pyridine, N,N-dimethylformamide, thiophene, diphenyl ether, triethylamine, an organic phosphorus compound, or monovalent or bivalent alcohol. The rare earth element of the rare earth metal compound is preferably lanthanum, neodymium, praseodymium, samarium, or gadolinium. Of these rare earth elements, neodymium is particularly preferred. Further, specific examples of the component (A) include neodymium tri-2-ethyl hexanoate, a complex compound of neodymium tri-2-ethyl hexanoate and acetylacetone, neodymium trineodecanoate, a complex compound of neodymium trineodecanoate and acetylacetone, and neodymium tri n-butoxide. These may be used alone or in combination of two or more thereof.

The component (B) used in the coordination polymerization mentioned above is selected from organoaluminium compounds. The organoaluminum compounds include, specifically, a trihydrocarbyl aluminum compound represented by a formula: $R^{12}{}_3Al$, hydrocarbyl aluminum hydride represented by a formula: $R^{12}{}_2AlH$ or a formula: $R^{12}AlH_2$ (in the formulae, each of $R^{12}$ independently represents a hydrocarbon group having a carbon number of 1 to 30), and a hydrocarbyl aluminoxane compound having a hydrocarbon group having a carbon number of 1 to 30. Also, the organoaluminum compounds include, specifically, trialkylaluminum, dialkylaluminum hydride, alkylaluminum dihydride, and alkyl aluminoxane. These may be used alone or in combination of two or more thereof. Note that, as the component (B), a combination of aluminoxane and another organoaluminum compound is preferably used.

The component (C) used in the coordination polymerization mentioned above is selected from: a compound having hydrolyzable halogen or a complex compound of the compound having hydrolyzable halogen and Lewis base; an organic halide having a tertiary alkyl halide, a benzyl halide, or an allyl halide; and an ionic compound of non-coordinating anion and counter cation. The component (C) may include, specifically, alkylaluminum dichloride, dialkylaluminum chloride, silicon tetrachloride, tin tetrachloride, a complex of zinc chloride and the Lewis base such as alcohol, a complex of magnesium chloride and the Lewis base such as alcohol, benzyl chloride, t-butyl chloride, benzyl bromide, bromide t-butyl, and triphenyl carbonium tetrakis (pentafluorophenyl) borate. These components (C) may be used alone or in combination of two or more thereof.

The polymerization initiator mentioned above may be preliminarily prepared by using, other than the above components (A), (B), and (C), the conjugated diene compound and/or non-conjugated diene compound which are the same as the monomers for the polymerization, if necessary. Also, a part of or the whole component (A) or component (C) may be used being supported on an inert solid. An amount of each of these components may be set appropriately and, typically, the component (A) is 0.001 to 0.5 mmol per 100 g of the monomer. Also, a molar ratio of the component (B)/the component (A) is preferably 5 to 1000, and a molar ratio of the component (C)/the component (A) is preferably 0.5 to 10.

The polymerization temperature of the coordination polymerization mentioned above is preferably in a range of -80 to 150°C, more preferably in a range of -20 to 120°C. Also, as the solvent used for the coordination polymerization, the hydrocarbon solvent inert to the reaction presented by way of example in the above description of the anionic polymerization may be used, and the concentration of the monomer in the reaction solution is also the same as that of

the anionic polymerization. Further, the reaction pressure for the coordination polymerization is also the same as that of anionic polymerization and, preferably, from raw materials used for the polymerization, the reaction inhibiting substances such as water, oxygen, carbon dioxide, and a protonic compound are preliminarily removed.

<<Modification Reaction>>

The modified conjugated diene-based copolymer disclosed herein is produced by having the active site of the conjugated diene-based polymer obtained by the anionic polymerization or coordination polymerization described above react with a modifying agent as defined in claim 1. Preferably, the modifying agent has at least one of the nitrogen-containing functional group or the oxygen-containing functional group.

Preferably, an example of the modifying agent described above includes a hydrocarbyloxy silane compound having a protected primary amino group. Examples of a preferred hydrocarbyloxy silane compound having the protected primary amino group include N,N-bis (trimethylsilyl) aminopropylmethyldimethoxysilane, 1-trimethylsilyl-2,2-dimethoxy-1-aza-2-silacyclopentane, N,N-bis (trimethylsilyl) aminopropyltrimethoxysilane, N,N-bis (trimethylsilyl) aminopropyltriethoxysilane, N,N-bis (trimethylsilyl) aminopropylmethyldiethoxysilane, N,N-bis (trimethylsilyl) aminoethyl trimethoxysilane, N,N-bis (trimethylsilyl) aminoethyl triethoxysilane, N,N-bis (trimethylsilyl) aminoethyl methyl dimethoxy silane, and N,N-bis (trimethylsilyl) aminoethyl methyl diethoxy silane. Of these hydrocarbyloxy silane compounds, N,N-bis (trimethylsilyl) aminopropylmethyldimethoxysilane, N,N-bis (trimethylsilyl) aminopropylmethyldiethoxysilane, and 1-trimethylsilyl-2,2-dimethoxy-1-aza-2-sila cyclopentane are preferred. These hydrocarbyloxysilane compounds may be partial condensates. Here, the partial condensates refer to the modifying agent with a part of SiOR having an SiOSi bond due to condensation. These may be used alone or in combination of two or more thereof.

An amount of hydrocarbyloxysilane compound having the protected primary amino group is preferably 0.5 to 200 mmol per 1 kg of the conjugated diene polymer. The amount is more preferably 1 to 100 mmol, particularly preferably 2 to 50 mmol, per 1 kg of the conjugated diene polymer. Here, the conjugated diene-based polymer refers to mass of the polymer alone that does not contain additives and the like such as an antioxidant added before or after the production thereof. Note that a method of adding the modifying agent is not particularly limited but may be lamp-sum addition, installment addition, or continuous addition. Of these methods, the lump-sum addition is preferred.

According to the disclosure herein, after the modification reaction, the condensation reaction may be carried out by further using a specific condensation accelerator. In the condensation reaction, the hydrocarbyloxysilane compound residue introduced to the active site of the condensation as described above, or unreacted hydrocarbyloxysilane compound residue described above, is condensed. Such a condensation accelerator may be a compound containing a tertiary amino group, or an organic compound containing at least one element of any of Group 3, Group 4, Group 5, Group 12, Group 13, the Group 14, and Group 15 in the periodic table (the long period model). Further, the condensation accelerator is preferably alkoxides, carboxylate, trialkyl siloxane, or acetylacetonate complex salt containing at least one kind of metal selected from a group composed of titanium (Ti), zirconium (Zr), bismuth (Bi), aluminum (Al), and tin (Sn). Specific examples of preferred condensation accelerator include tetrakis (2-ethyl-1,3-hexanediolato) titanium, tetrakis (2-ethylhexoxy) titanium, titanium di-n-butoxide (bis-2,4-pentanedionate), and bis (2-ethylhexanoate) tin.

The condensation accelerator used herein may be added before the modification reaction but is preferably added to the reaction system during and/or after the modification reaction. When the condensation accelerator is added before the modification reaction, a direct reaction with the active site occurs, possibly inhibiting the modifying agent from being introduced to the active site. Addition timing of the condensation accelerator is typically 5 minutes to 5 hours after the start of the modification reaction, preferably 15 minutes to 1 hour after the start of the modification reaction. As an amount of the condensation accelerator, a molar ratio of the compound to a total amount of a hydrocarbyloxy alkoxy group present in the reaction system is preferably 0.1 to 10, more preferably 0.5 to 5. The amount of the condensation accelerator within the above ranges allows efficient progress of the condensation reaction.

The condensation reaction described above proceeds in the presence of the above-mentioned condensation accelerator and water vapor or water. The presence of water vapor may be provided by solvent removal process by steam stripping, and the condensation reaction proceeds during the steam stripping. Or, the condensation reaction may be carried out in a system having water droplets dispersed in the organic solvent, or in an aqueous solution. Condensation reaction temperature is preferably 20 to 180°C, more preferably 30 to 170°C, further preferably 50 to 170°C, particularly preferably 80 to 150°C. When the condensation reaction temperature is within these ranges, the condensation reaction may efficiently progress and be completed, suppressing quality deterioration and the like caused by aging reaction and the like of the polymer due to aging degradation of the resulting modified conjugated diene-based polymer.

The condensation reaction time is typically 5 minutes to 10 hours, preferably approximately 15 minutes to 5 hours. The condensation time within these ranges allows the condensation reaction to be smoothly completed. The pressure of the reaction system during the condensation reaction is typically 0.01 to 20 MPa, preferably 0.05 to 10 MPa. A manner having the condensation reaction in the aqueous solution is not particularly limited but may use a batch reactor, or the condensation reaction may be continuously carried out by a multistage continuous reactor and the like. Also, the

condensation reaction and desolvation may be carried out simultaneously.

In the disclosure herein, after the reaction of the conjugated diene polymer and the hydrocarbyloxy silane compound having the protected primary amino group, or after the condensation reaction described above, a protecting group of the protected nitrogen atom is preferably eliminated. The elimination of the protecting group may be carried out by employing known methods, for example, desolvation process using steam such as steam stripping ,and hydrolysis.

In the disclosure herein, other compounds used as the modifying agent described above include a compound having the nitrogen-containing functional group such as, for example, bis (diethylamino) benzophenone, 1,3-dimethyl-2-imidazolidinone, N-methylpyrrolidone, and 4-dimethylamino benzylidene aniline. These compounds having the nitrogen-containing functional group may be used alone or in combination of two or more thereof. The use of the compound having the nitrogen-containing functional group as the modifying agent allows introduction of, to the conjugated diene-based polymer, the functional group containing nitrogen such as, for example, the nitrile group, the azo group, the isocyanate group, the substituted or unsubstituted amino group, the substituted or unsubstituted amide group, the unsubstituted substituted imino group, the substituted or unsubstituted imidazole group, the substituted or unsubstituted pyridyl group, and the substituted or unsubstituted imide group.

In the disclosure herein, still other compounds used as the modifying agent include a compound having the oxygen-containing functional group such as, for example, a hydrocarbyloxy silane compound containing a (thio) epoxy group, a hydrocarbyloxy silane compound containing imine residue, a hydrocarbyloxy silane compound containing imidazole residue, a hydrocarbyloxy silane compound containing carboxylic acid hydrocarbyl ester residue, a hydrocarbyloxy silane compound containing an isocyanate group, or a hydrocarbyloxy silane compound containing carboxylic acid anhydride residue. The use of the compound having the oxygen-containing functional group as the modifying agent allows introduction of, to the conjugated diene-based polymer, the functional group containing oxygen such as, for example, the ester group, the ketone group, the substituted or unsubstituted alkoxy group, the substituted or unsubstituted alkoxysilyl group, the unsubstituted substituted hydroxyl group, the substituted or unsubstituted aldehyde group, and the substituted or unsubstituted carboxyl group.

Note that "(thio) epoxy" herein refers to epoxy and/or thioepoxy.

Reference examples of the hydrocarbyloxy silane compound include tetramethoxysilane, tetraethoxysilane, tetra-n-propoxysilane, tetraisopropoxysilane, tetra-n-butoxysilane, tetraisobutoxy silane, tetra-sec-butoxysilane, tetra-tert-butoxysilane, methyl trimethoxysilane, methyl triethoxysilane, methyl tripropoxysilane, methyl triisopropoxysilane, ethyl trimethoxysilane, ethyl triethoxysilane, propyl triethoxysilane, butyl trimethoxysilane, phenyl trimethoxysilane, phenyl triethoxy silane, dimethyl dimethoxy silane, methyl phenyl dimethoxy silane, vinyl trimethoxy silane, vinyl triethoxy silane, divinyl dimethoxysilane, and divinyl diethoxy silane.

Examples of the hydrocarbyloxy silane compound containing the (thio) epoxy group include 2-glycidoxyethyl trimethoxysilane, 2-glycidoxyethyl triethoxysilane, (2-glycidoxyethyl) methyl dimethoxysilane, 3-glycidoxypropyl trimethoxysilane, 3-glycidoxypropyl triethoxysilane, (3-glycidoxypropyl) methyl dimethoxysilane, 2-(3,4-epoxycyclohexyl) ethyl trimethoxysilane, 2-(3,4-epoxycyclohexyl) ethyl triethoxysilane, and 2-(3,4-epoxycyclohexyl) ethyl (methyl) dimethoxysilane, and those compounds having the epoxy group substituted by the thioepoxy group. Of these hydrocarbyloxy silane compounds containing the (thio) epoxy group, 3-glycidoxypropyl trimethoxysilane and 3-glycidoxypropyl triethoxysilane are preferred.

Examples of the hydrocarbyloxy silane compound containing the imine residue include N-(1,3-dimethylbutylidene)-3-(triethoxysilyl)-1-propane amine, N-(1-methyl-ethylidene) -3- (triethoxysilyl)-1-propanamine, N-ethylidene-3-(triethoxysilyl)-1-propanamine, N-(1-methyl-propylidene)-3-(triethoxysilyl)-1-propanamine, N-(4-N,N-dimethylamino benzylidene)-3-(triethoxysilyl)-1-propanamine, N-(cyclohexylidene)-3-(triethoxysilyl)-1-propanamine, and also trimethoxysilyl compounds, methyldiethoxysilyl compounds, ethyl diethoxy silyl compounds, methyldimethoxysilyl compounds, and ethyl dimethoxy silyl compounds, those corresponding to the triethoxy silyl compounds. Of these hydrocarbyloxy silane compounds containing the imine residue, N-(1-methyl-propylidene)-3-(triethoxysilyl)-1-propanamine and N-(1,3-dimethylbutylidene)-3-(triethoxysilyl)-1-propane amine are preferred.

Examples of the hydrocarbyloxy silane compound containing the imidazole residue include 1-[3-(triethoxysilyl) propyl]-4,5-dihydro-imidazole, 1-[3-(trimethoxysilyl) propyl]-4,5-dihydro-imidazole, N-(3-triethoxysilylpropyl)-4,5-dihydro-imidazole, N-(3-isopropoxy silyl propyl)-4,5-dihydro-imidazole, and N-(3-methyl-diethoxy silyl propyl)-4,5-dihydro-imidazole. Of these hydrocarbyloxy silane compounds containing the imidazole residue, N-(3-triethoxysilylpropyl)-4,5-dihydro-imidazole is preferred.

Examples of the hydrocarbyloxy silane compound containing the carboxylic acid hydrocarbyl ester residue include 3-methacryloyloxy propyl triethoxysilane, 3-methacryloyloxy propyl trimethoxysilane, 3-methacryloyloxy propyl methyl diethoxysilane, and 3-methacryloyloxy propyl triisopropoxysilane. Of these hydrocarbyloxy silane compounds containing the carboxylic acid hydrocarbyl ester residue, 3-methacryloyloxy propyl trimethoxysilane is preferred.

Examples of the hydrocarbyloxy silane compound containing the isocyanate group include 3-isocyanatopropyl trimethoxysilane, 3-isocyanatopropyl triethoxysilane, 3-isocyanatopropylmethyl diethoxysilane, and 3-isocyanatopropyl triisopropoxysilane. Of these hydrocarbyloxy silane compounds containing the isocyanate group, 3-isocyanatopropyl

triethoxysilane is preferred.

Examples of the hydrocarbyloxy silane compound containing the carboxylic acid anhydride residue include 3-triethoxysilylpropyl succinic anhydride residue, 3-trimethoxysilylpropyl succinic anhydride residue, and 3-methyl-diethoxy silyl propyl succinic anhydride residue. Of these hydrocarbyloxy silane compounds containing the carboxylic acid anhydride residue, 3-triethoxysilylpropyl succinic anhydride residue is preferred.

The hydrocarbyloxy silane compounds containing the (thio) epoxy group, the hydrocarbyloxy silane compounds containing the imine residue, the hydrocarbyloxy silane compounds containing the imidazole residue, the hydrocarbyloxy silane compounds containing the carboxylic acid hydrocarbyl ester residue, the hydrocarbyloxy silane compounds containing the isocyanate group, and the hydrocarbyloxy silane compounds containing the carboxylic acid anhydride residue mentioned above may be used alone or in combination of two or more thereof. Also, these hydrocarbyloxysilane compounds having partial condensation may be used.

The modification reaction caused by the other compounds and the still other compounds described above those used as the modifying agent is preferably carried out in the solution, which may contain the monomer used in the polymerization. Also, a reaction manner of the modification reaction is not particularly limited but may be either a batch manner or a continuous manner. Further, the reaction temperature of the modification reaction is not particularly limited as long as the reaction proceeds, and the reaction temperature of the polymerization reaction may be directly employed. Note that an amount of the modifying agent per 1 mol of the polymerization initiator used for the production of the conjugated diene-based copolymer is preferably in a range of 0.25 to 3.0 mol, more preferably in a range of 0.5 to 1.5 mol.

Also, the modified conjugated diene-based polymer used in the rubber composition disclosed herein has weight-average molecular weight (Mw) which is preferably $10\times10^3$ to $5000\times10^3$, more preferably $100\times10^3$ to $500\times10^3$.

The weight-average molecular weight (Mw) within the above range allows excellent processability. Furthermore, a molecular weight distribution represented by a ratio of weight average molecular weight (Mw)/number average molecular weight (Mn) is preferably 1 to 4, more preferably 1 to 3. When the molecular weight distribution is within the above range, even when the modified conjugated diene-based polymer is blended into the rubber composition, the workability of the rubber composition does not become deteriorated, and the kneading is facilitated. Also, properties of the rubber composition may be sufficiently improved.

Note that the weight average molecular weight (Mw) and the number average molecular weight (Mn) are values in terms of standard polystyrene measured by gel permeation chromatography (GPC).

<Butyl-based Rubber>

The rubber composition disclosed herein may include a butyl-based rubber. Using the butyl-based rubber as the rubber component together with the modified conjugated diene-based polymer having the functional group that interacts with the layered compounds described above, namely, providing a blended system of the modified conjugated diene-based polymer serving as an end-modified polymer and the like and an IIR based polymer as butyl-based rubber, the layers between the layered compound are expanded and a nanocomposite is formed. Therefore, excellent gas barrier properties better than that using butyl-based rubber alone is exhibited.

The butyl-based rubber that may be used in the disclosure herein is at least one selected from 1) butyl rubber (IIR), 2) halogenated butyl rubber (X-IIR) such as brominated butyl rubber (Br-IIR) and chlorinated butyl rubber (Cl-IIR), and 3) a copolymer obtained by polymerization of (a) isobutylene and (b) a vinyl compound containing a halogen group by using a cationic polymerization initiator, or a copolymer obtained by polymerization of (a) isobutylene, (b) the vinyl compound containing the halogen group or (a) isobutylene, (c) an aromatic vinyl compound containing a halogen group, and (d) a vinyl compound containing no halogen group by using the cationic polymerization initiator.

The butyl-based rubber used herein has excellent air impermeability (gas-barrier properties), ozone resistance, aging resistance, electrical properties, and chemical resistance and is rubber with particularly low air permeability. Therefore, the butyl-based rubber used herein is useful for various rubber members, a tire member such as a pneumatic tire and, especially, an inner liner.

The copolymers of the above 3) used in the disclosure herein may be in three types: a copolymer obtained by polymerizing (a) isobutylene and (b) the vinyl compound containing the halogen group with the cationic polymerization initiator, a copolymer obtained by polymerizing (a) isobutylene, (b) the vinyl compound containing the halogen group, and (d) a vinyl compound containing no halogen group with the cationic polymerization initiator; and a copolymer obtained by polymerizing (a) isobutylene, (c) the aromatic vinyl compound containing the halogen group, and (d) the vinyl compound containing no halogen group with the cationic polymerization initiator. Containing at least the halogen group, these copolymers have higher polarity than usual rubber compositions and may be easily intercalated between layers of an organized layered clay mineral. Further, although the three types of copolymers described above 3) have higher polarity than usual rubber compositions, these have low polarity portions such as isobutylene and an aromatic vinyl compound. Thus, these copolymers have high compatibility with the modified conjugated diene-based polymer described above and therefore allow separation of each layer of the layered compound and an improvement in an aspect ratio, thereby

further improving the gas-barrier properties.

Examples of the vinyl compound containing the halogen group used in the production of the copolymer of the above 3) include vinyl chloroacetate, allyl chloroacetate, and vinyl chloride, and these are commercially available. A bonding amount of a vinyl compound unit containing a halogen group in the above copolymer is 0.1 to 8% by mass, preferably 0.3 to 5% by mass. When the bonding amount of the vinyl compound unit containing the halogen group in the above copolymer is less than 0.1% by mass, the vinyl compound containing a halogen group has difficulty to be intercalated between the layers of the organized layered compound. Also, when the bonding amount exceeds 8% by mass, an elasticity module of the rubber composition becomes higher, deteriorating the crack resistance.

Also, examples of the aromatic vinyl compound containing a halogen group used in the production of the copolymer of the above 3) include p-chloromethyl styrene, p-bromo-methylstyrene, p-chlorostyrene, and p-bromostyrene. Of these aromatic vinyl compounds containing the halogen group, p-halomethylstyrene such as p-chloromethylstyrene and p-bromo-methyl styrene is preferred. The bonding amount of an aromatic vinyl compound unit containing a halogen group in the above copolymer is 5 to 70% by mass, preferably 10 to 70% by mass. When the bonding amount of the aromatic vinyl compound unit containing the halogen group in the above copolymer is less than 5% by mass in the above copolymer, the copolymer has difficulty to be intercalated between the layers of the organized layered compound. Also, when the bonding amount exceeds 70% by mass, the elasticity module of the rubber composition becomes higher, deteriorating the crack resistance.

Examples of the aromatic vinyl compound having no halogen group that may be used for the production of the above copolymer include styrene, α-methyl styrene, 1-vinylnaphthalene, 3-vinyltoluene, ethylvinylbenzene, divinylbenzene, 4 cyclohexyl styrene, and 2,4,6-trimethyl styrene. Of these aromatic vinyl compounds, styrene is preferred. The use of the aromatic vinyl compounds having no halogen group for the production of the above copolymer allows an improvement in the compatibility of the produced copolymer with rubber. A binding amount of the aromatic vinyl compound unit having no halogen group in the above copolymer is preferably 65% by mass or less, more preferably 5 to 45% by mass. When the binding amount of the aromatic vinyl compound unit having no halogen group in the above copolymer exceeds 65% by mass, the elasticity module of the rubber composition becomes higher, deteriorating the crack resistance.

The cationic polymerization initiator used in the production of the copolymers of the above 3) is a reagent for initiating cationic polymerization which is a chain polymerization reaction with a cation serving as a growth activation species. The cationic polymerization initiator used herein is not particularly limited and examples thereof include Lewis acids such as boron trichloride ($BCl_3$), aluminum chloride ($AlCl_3$), tin tetrachloride ($SnCl_4$), titanium tetrachloride ($TiCl_4$), vanadium pentachloride ($VCl_5$), iron trichloride ($FeCl_3$), boron trifluoride ($BF_3$), chloro diethylaluminum ($Et_2AlCl$), and dichloro ethyl aluminum ($EtAlCl_2$). Of these cationic polymerization initiators, titanium tetrachloride is preferred.

The weight average molecular weight of the above copolymer is 2000 to 200000, preferably 2000 to 50000. When the weight average molecular weight of the copolymer is less than 2000, fracture resistance of the inner liner becomes deteriorated. Also, when the weight-average molecular weight of the copolymer exceeds 200000, the copolymer has difficulty to be intercalated between the layers of the organized layered clay mineral.

The copolymers of the above 3) may be produced by cationic polymerization in a known manner using the cationic polymerization initiator described above.

As the solvent used in the production of the copolymers of above 3), a solvent that is typically used for the cationic polymerization may be appropriately used. Examples of the solvent include hydrocarbon solvents such as aliphatic hydrocarbon, aromatic hydrocarbon, and halogenated hydrocarbon. Of these hydrocarbon solvents, aromatic hydrocarbon is preferred, and toluene is more preferred. Specific examples of aliphatic hydrocarbon include pentane, and hexane, and specific examples of the aromatic hydrocarbon include benzene, toluene, and xylene. Specific examples of halogenated hydrocarbon include chloromethane, chloroethane, methylene chloride, 1,1-dichloroethane, chloroform, and 1,2-dichloroethane.

These solvents may be used alone or in combination of two or more thereof. Further, together with these solvents, a small amount of another solvent such as, for example, acetic ester such as ethyl acetate and an organic compound having a nitro group such as nitroethane may be used.

The polymerization temperature in the production of the copolymer of the above 3) is preferably -100°C to -30°C. The polymerization temperature lower than -100°C slows down progress of the polymerization reaction. On the other hand, the polymerization temperature exceeding -30°C causes severe chain transfer reaction and tends to significantly reduce the molecular weight, which is undesirable.

Also, the polymerization reaction of the copolymer of the above 3) is preferably carried out under a pressure sufficient to keep the monomers under a substantially liquid phase. That is, although the reaction pressure depends on the monomer to be polymerized, the solvent to be used, and the polymerization temperature, the polymerization may be carried out under a higher pressure if desired. Such a high pressure may be provided by applying a pressure to the reactor with a gas inert to the polymerization reaction.

Further, in the production of the copolymer of the above 3), from all materials such as a monomer, cationic polymerization initiator, and the solvent those typically used for the production, catalyst poisons such as water, oxygen,

and carbon dioxide are preferably removed.

In order to improve the gas-barrier properties of the rubber composition, a blend ratio (Y/X) of the modified conjugated diene-based polymer (X) and the butyl-based rubber (Y) is preferably 99.5/0.5 to 40/60, more preferably 99/1 to 80/20, particularly preferably 95/5 to 60/40.

(Rubber Composition)

The rubber composition disclosed herein may contain, within a range not to impair the effects of the present disclosure, rubber component other than the modified conjugated diene-based polymer and the butyl-based rubber those described above.

Also, the rubber composition as disclosed herein may contain compounding agents including, for example, a vulcanizing agent such as sulfur, a filler such as silica and carbon black, an oil content such as process oil, a vulcanization accelerator, an antioxidant, a softening agent, zinc oxide, and stearic acid.

The rubber composition disclosed herein may be produced by any usual method. For example, the rubber composition may be produced by kneading the rubber component (the modified conjugated diene-based polymer, the butyl-based rubber which is optionally added and other rubber components which are optionally added), the layered compound, and the suitable compounded agents; or by producing a rubber master batch containing the rubber component and the layered compound, and then kneading the rubber master batch together with the compounding agents as mentioned above. Considering dispersibility of each layer of the layered compound in the rubber composition, the production by using the rubber master batch is preferred.

The rubber master batch may be prepared by, for example, mixing the rubber composition and the layered compound into water and/or the organic solvent, followed by removal of the water and/or the organic solvent therefrom. The organic solvent may be, for example, toluene, cyclohexane, and hexane.

(Inner Liner Material)

An inner liner material disclosed herein is made of the rubber composition disclosed herein. The inner liner material disclosed herein is extruded and processed by a usual method, followed by vulcanization of a material thus obtained together with, or separately from, a pneumatic tire. An inner liner thus obtained has superior gas-barrier properties.

(Pneumatic Tire)

The pneumatic tire disclosed herein includes an inner liner formed with the inner liner material disclosed herein. The disclosed pneumatic tire may be manufactured by any usual method. The air to be filled in the tire may contain inert gas, such as nitrogen, argon, and helium, in addition to normal air or air with adjusted oxygen partial pressure. The pneumatic tire exhibits superior retainability of the gas filled therein.

EXAMPLES

Hereinafter, the disclosed products will be specifically described with reference to examples but are not limited thereto. Characteristics in each example were measured by employing measuring methods described below. Also, materials such as the modified conjugated diene-based polymer used in the examples are shown below.

<Microstructure of Unmodified SBR and Modified SBR>

The vinyl bond content in a butadiene portion of the polymer was obtained by an infrared method, and an amount of bonded styrene was calculated from an integral ratio of $^1$H-NMR spectrum.

<Microstructure of Modified BR>

A microstructure [the cis-1,4 bond content (Cis) (%) and the 1,2-vinyl bond content (Vi) (%)]

With carbon disulfide of the same cell as a blank, a transmittance spectrum of a carbon disulfide solution of polybutadiene prepared at a concentration of 5mg/ml was measured by using FT-IR and, by using values of e, f, and g derived from the following matrix equation:

[Equation 1]

$$\begin{pmatrix} 1.7455 & 0 & -0.0151 \\ -0.0454 & 0.4292 & -0.0129 \\ -0.007 & 0 & 0.3746 \end{pmatrix} \begin{pmatrix} \log_{10}(a/d) \\ \log_{10}(a/b) \\ \log_{10}(a/c) \end{pmatrix} = \begin{pmatrix} e \\ f \\ g \end{pmatrix}$$

[where a represents a mountain peak value around a transmittance spectrum of 1130 $cm^{-1}$ measured by Fourier transform infrared spectroscopy (FT-IR); b represents a valley peak value around 967 $cm^{-1}$; c represents a valley peak value around 911 $cm^{-1}$; and d represents a valley peak value around 736 $cm^{-1}$] and in accordance with the following formulae (I') and (II'):

$$(\text{cis-1,4 bond content})=e/(e+f+g)\times 100 \ldots \text{(I')}$$

$$(\text{vinyl bond content})=g/(e+f+g)\times 100 \ldots \text{(II')}$$

the cis-1,4 bond content and the vinyl bond content were obtained.

<Molecular Weight>

By using a gel permeation chromatography [GPC: HLC-8220 manufactured by Tosoh Corporation, column: GMH-XL (2 in series) manufactured by Tosoh Corporation, detector: differential refractometer (RI)], with the monodisperse polystyrene as a reference, Mn and Mw of each of unmodified SBR, modified SBR, and modified BR were obtained.

<Modifying Agent>

- A modifying agent 1: N,N-bis (trimethylsilyl) aminopropylmethyldiethoxysilane

Under a nitrogen atmosphere, to 400 ml of a dichloromethane solvent inside a glass flask equipped with a stirrer, 36 g of 3-aminopropyl-methyl diethoxysilane (manufactured by Gelest, Inc.) serving as an aminosilane site was added. To a mixture thus obtained, 48 ml of chloride trimethylsilane (Sigma-Aldrich Co. LLC.) serving as the protective site and 53 ml of triethylamine 53 ml were added, and a mixture thus obtained was stirred at room temperature for 17 hours. Then, a reaction solution thus obtained was subjected to an evaporator so as to remove the solvent therefrom, and thereby a reaction mixture was obtained, which was then subjected to vacuum distillation under 665 Pa (5 mm/Hg). Thereby, as fraction at 130 to 135°C, 40 g of N,N-bis (trimethylsilyl) aminopropylmethyl diethoxysilane was obtained.

- A modifying agent 2: 1,3-dimethyl-2-imidazolidinone
- A modifying agent 3: tetraethoxysilane
- A modifying agent 4: N-(1,3-dimethylbutylidene)-3-(triethoxysilyl)-1-propane amine
- Initiator: hexamethyleneimine

The modifying agents 2, 3, and the initiator described above were purchased from Tokyo Chemical Industry Co., Ltd., and the modified agent 4 described above was purchased from Nichibi Trading Co., Ltd..

<Modified Conjugated Diene-based Polymer, Unmodified Conjugated Diene-based Polymer, and Butyl-based Rubber>

[Production Example 1: Production of N, N-bis (trimethylsilyl) aminopropylmethyldiethoxysilane-modified SBR (modified SBR-1)]

Into a pressure-resistant glass vessel with a capacity of 800 mL that has been dried and purged with nitrogen, 300 g of cyclohexane, 40 g of 1,3-butadiene, 10 g of styrene, and 0.40 mmol of di-tetrahydrofuryl propane were added, followed by further addition of 0.35 mmol of n-butyl lithium (n-BuLi) thereto. A mixture thus obtained was allowed for the polymerization reaction at 50°C for 1.5 hours. In this case, a polymerization conversion rate was approximately 100%.

Next, a polymer solution thus obtained was maintained at 60°C, to which 0.35 mmol of the modifying agent 1 (N,N-bis (trimethylsilyl) aminopropylmethyldiethoxysilane) was added, and a mixture thus obtained was allowed for a reaction for 15 minutes. Then, while the polymer solution was maintained at 60°C, 0.35 mmol of tetrakis (2-ethyl-1,3-hexanediolato) titanium was further added to the polymer solution, and a mixture thus obtained was stirred for 15 minutes to allow for a reaction. Then, a resulting product was extracted to a methanol solution containing 1.3 g of 2,6-di-tert-butyl-p-cresol so as to stop polymerization, desolvated by steam stripping, and then dried on a roll at a temperature of 110°C. Thereby, the modified SBR-1 with the bound styrene content at 20% by mass, the vinyl bond content at 55%, Mw of $250\times10^3$, and Mw/Mn of 1.2 was obtained.

[Production Example 2: Production of 1,3-dimethyl-2-imidazolidinone-modified SBR (modified SBR-2)]

In a manner similar to the production example 1 other than changing the modification agent 1 of the production example 1 to an equimolar amount of 1,3-dimethyl-2-imidazolidinone (the modifying agent 2), modified SBR-2 with the bound styrene content at 20% by mass, the vinyl bond content at 50%, Mw of $250\times10^3$, and Mw/Mn of 1.2 was obtained.

[Production Example 3: Production of Tetraethoxysilane-modified SBR (modified SBR-3)]

In a manner similar to the production example 1 other than changing the modifying agent 1 of the production example 1 to an equimolar amount of tetraethoxysilane (modifying agent 3), modified SBR-3 with the bound styrene content at 35% by mass, the vinyl bond content at 20%, Mw of $250\times10^3$, and Mw/Mn of 1.2 was obtained.

[Production Example 4: Production of N-(1,3-dimethylbutylidene)-3-(triethoxysilyl)-1-propaneamine-modified SBR (modified SBR-4)]

In a manner similar to the production example 1 other than changing the modifying agent 1 of the production example 1 to an equimolar amount of N-(1,3-dimethylbutylidene)-3-(triethoxysilyl)-1-propaneamine (modifying agent 4), modified SBR-4 with the bound styrene content at 20% by mass, the vinyl bond content at 50%, Mw of $250\times10^3$, and Mw/Mn of 1.2 was obtained.

[Production Example 5: Production of hexamethyleneimine-modified SBR (modified SBR-5)]

Into the pressure-resistant glass vessel with the capacity of 800 mL that has been dried and purged with nitrogen, 300 g of cyclohexane, 37.5 g of 1,3-butadiene, 12.5 g of styrene, 0.03 mmol of potassium-t-amylate, and 2 mmol of THF were injected, followed by further addition of 0.41 mmol of hexamethyleneimine serving secondary amine thereto. To a mixture thus obtained, 0.45 mmol of n-butyl lithium (BuLi) was added, and a mixture thus obtained was allowed for the polymerization at 50°C for 2.5 hours. No precipitation was observed in the polymerization system from start to the end of the polymerization; the polymerization system remained uniform and clear. The polymerization conversion rate was approximately 100%.

Next, to the polymerization system, 0.09 mmol of tin tetrachloride with 1 mol/L of cyclohexane solution was further added as the modifying agent and a mixture thus obtained was allowed for the modification reaction for 30 minutes. Then, to the resulting product, 0.5 ml of a 2,6-di-tert-butyl paracresol (BHT) solution with 5% by mass of isopropyl alcohol was added to stop the reaction, and the polymerization system was further dried by employing a conventional method. Thereby, modified SBR-5 with the combined styrene content at 25% by mass, the vinyl bond content at 30%, Mw of $250\times10^3$ and Mw/Mn of 1.2 was obtained.

[Production Example 6: Production of unmodified SBR]

Into the pressure-resistant glass vessel with the capacity of 800 mL that has been dried and purged with nitrogen, 300 g of cyclohexane, 40 g of 1,3-butadiene, 10 g of styrene, 0.40 mmol of ditetrahydrofuryl propane were

added, followed by further addition of 0.35 mmol of n-butyl lithium (n-BuLi). Then, a mixture thus obtained was allowed for the polymerization reaction at 50°C for 1.5 hours. In this case, the polymerization conversion rate was approximately 100%.

Then, to the polymerization system, 0.5 ml of an isopropanol solution with 2,6-di-t-butyl-p-cresol (BHT) (BHT content: 5% by mass) was added to stop the polymerization reaction, and the resulting product was further dried by employing the conventional method. Thereby, unmodified SBR with the bound styrene content at 20% by mass, the vinyl bond content at 55 %, Mw of $250\times10^3$, and Mw/Mn of 1.1 was obtained.

[Production Example 7: Production of N,N-bis (trimethylsilyl) aminopropyl methyl diethoxy silane modified BR (modified BR-1)]

In a manner similar to the production example 1 other than using 1,3-butadiene in place of styrene, modified BR-1 with Mw of $250\times10^3$ and Mw/Mn of 1.2 was obtained.

[Butyl-based Rubber]

The following butyl rubber and brominated butyl rubber were used.

- Butyl rubber (IIR): Butyl269 (produced by Exxon Mobile Chemical Cooperation)
- Brominated butyl rubber (Br-IIR): Bromobutyl2222 (Exxon Mobile Chemical Cooperation)

<Layered Compound>

The following layered compounds were used.

[Layered Compound A]
Cloisite 20A: produced by Southern clay products, Inc., montmorillonite organized (reformed) by dimethyl dihydrogenated tallow ammonium chloride [dimethyl dihydrogenated ammonium cation contained in the dimethyl dihydrogenated tallow ammonium chloride has a structure in which, in the formula (1), $R^1$ represents the methyl group, $R^2$ represents the methyl group, $R^3$ represents an alkyl group having a carbon number of 14 to 18, and $R^4$ represents the alkyl group having a carbon number of 14 to 18].
[Layered Compound B]
Esuben E: produced by HOJUN Co., Ltd., montmorillonite organized with trimethylstearylammonium
[Layered Compound C]
Esuben NZ: produced by HOJUN Co., Ltd., montmorillonite organized with benzyl dimethyl stearyl ammonium
[Layered Compound D]
Esuben N400: produced by HOJUN Co., Ltd., montmorillonite organized with dimethyl stearyl ammonium
[Layered Compound E]
Esuben NO12S: produced by HOJUN Co., Ltd., montmorillonite organized with oleyl-bis (2-hydroxyethyl) methyl ammonium
[Layered Compound F]
4C-TS: produced by Topy Industries, Ltd., mica organized with dimethyldistearyl ammonium
[Layered Compound G]
Hengel HV: produced by HOJUN Co., Ltd., non-organized montmorillonite

(Examples 1 to 9, Comparative Examples 1 to 3)

First, a rubber composition was prepared without butyl-based rubber and evaluated.

<Preparation of Rubber Master Batch>

Each of the modified SBR and the non-modified SBR shown in Table 1 was dissolved in toluene. To a toluene solution thus obtained, 20 parts by mass of the layered compound shown in Table 1 per 100 parts by mass of the modified SBR or unmodified SBR was added, and a mixture thus obtained was stirred at 100°C for 6 hours. After the stirring, the solvent was removed, and thus a rubber master batch was obtained.

<Production of Rubber Composition>

Compounding agents shown in Table 1 were added to each rubber master batch, and a mixture thus obtained was kneaded by a Plasto mill, and thus the rubber composition was produced. The dispersibility of each separated layers of the layered compound and the air permeability A (gas-barrier properties) of the rubber composition thus obtained were evaluated in the following manners.

<<Dispersibility>>

The obtained rubber composition was subjected to TEM observation, and thereby the dispersibility was visually evaluated. Excellent dispersibility is represented by 4, good dispersibility is represented by 3, fair dispersibility is represented by 2, and no dispersibility is represented by 1. Results are shown in Table 1.

<<Air Permeability A (gas-barrier properties)>>

The above rubber composition was vulcanized at 150°C for 30 minutes, and the air permeability A of the resulting rubber composition was evaluated in the following manner. By using an air permeation tester M-C1 (manufactured by Toyo Seiki Sheisaku-Sho, Ltd.), the air permeability of each rubber composition was measured at 60°C. Relative to the air permeability of the rubber composition of Comparative Example 3 represented by 100, the air permeability of each rubber composition are shown as an index in Table 1. A smaller index indicates lower air permeability, i.e., better gas-barrier properties.

[Table 1]

| | | | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|---|
| Formulation (parts by mass) | Rubber Master Batch | Modified SHR-1 | 100 | - | - | - | - | 100 | 100 | 100 | 100 | - | - | - |
| | | Modified SBR-2 | - | 100 | - | - | - | - | - | - | - | - | - | - |
| | | Modified SBR-3 | - | - | 100 | - | - | - | - | - | - | - | - | - |
| | | Modified SBR-4 | - | - | - | 100 | - | - | - | - | - | - | - | - |
| | | Modified SBR-5 | - | - | - | - | 100 | - | - | - | - | - | - | - |
| | | Unmodified SBR | - | - | - | - | - | - | - | - | - | 100 | 100 | 100 |
| | | Layered Compound B | 20 | 20 | 20 | 20 | 20 | - | - | - | - | 20 | - | - |
| | | Layered Compound C | - | - | - | - | - | 20 | - | - | - | - | - | - |
| | | Layered Compound D | - | - | - | - | - | - | 20 | - | - | - | - | - |
| | | Layered Compound E | - | - | - | - | - | - | - | 20 | - | - | - | - |
| | | Layered Compound F | - | - | - | - | - | - | - | - | 20 | - | - | - |
| | | Layered Compound G | - | - | - | - | - | - | - | - | - | - | 20 | - |
| | Stearic Acid *1 | | 2 | 2 | 2 | 2 | 2 | 2 | 2 | 2 | 2 | 2 | 2 | 2 |
| | Zinc Oxide *2 | | 2 | 2 | 2 | 2 | 2 | 2 | 2 | 2 | 2 | 2 | 2 | 2 |
| | Vulcanization Accelerator A *3 | | 0.4 | 0.4 | 0.4 | 0.4 | 0.4 | 0.4 | 0.4 | 0.4 | 0.4 | 0.4 | 0.4 | 0.4 |

(continued)

| | | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|
| | Vulcanization Accelerator B *4 | 0.3 | 0.3 | 0.3 | 0.3 | 0.3 | 0.3 | 0.3 | 0.3 | 0.3 | 0.3 | 0.3 | 0.3 |
| | Vulcanization Accelerator C *5 | 0.8 | 0.8 | 0.8 | 0.8 | 0.8 | 0.8 | 0.8 | 0.8 | 0.8 | 0.8 | 0.8 | 0.8 |
| | Sulfur *6 | 1.3 | 1.3 | 1.3 | 1.3 | 1.3 | 1.3 | 1.3 | 1.3 | 1.3 | 1.3 | 1.3 | 1.3 |
| | Dispersibility | 4 | 4 | 4 | 3 | 3 | 4 | 4 | 3 | 4 | 2 | 1 | - |
| | Air Permeability A (index) | 42 | 42 | 51 | 55 | 56 | 48 | 40 | 51 | 40 | 65 | 85 | 100 |

Note that *1 to *6 in the above Table 1 and in Tables 2 to 8 shown below are as follows.
*1 PALMAC 1600 manufactured by ACID CHEM
*2 205P manufactured by MID WEST ZINC CO.
*3 VULKACIT DM/MG manufactured by LANXESS
*4 VULKACIT D/EGC manufactured by LANXESS
*5 CURE-RITE BBTS manufactured by Emerald Performance Materials
*6 Powdered sulfur manufactured by TSURUMI CHEMICAL INDUSTRY CO., LTD.
** Reference Example

As apparent from the results in Table 1, the rubber compositions of Examples 1, 2, 4 and 6 to 9 using the modified SBR and the layered compound have lower permeability, i.e., excellent gas-barrier properties, in comparison to the rubber compositions of Comparative Examples 1 and 2 using the unmodified SBR and the layered compound and the rubber composition of Comparative Example 3 using the unmodified SBR without using the layered compound. Especially, the rubber compositions of Examples 1 and 6 to 9 using N,N-bis (trimethylsilyl) aminopropylmethyldiethoxysilane modified SBR and the rubber composition of Example 2 using 1,3-dimethyl-2-imidazolidinone have extremely low permeability, i.e., demonstrated significantly superior gas-barrier properties.

Looking at Comparative Examples individually, the rubber composition of Comparative Example 1 using the unmodified SBR and the organized layered compound has high air permeability, i.e., poor gas-barrier properties. The rubber composition of Comparative Example 2 using the unmodified SBR and non-organized layered compound has even higher air permeability than the rubber composition of Comparative Example 1, i.e., poorer gas-barrier properties. The rubber composition of Comparative Example 3 using the unmodified SBR without using the layered compound has the highest air permeability, i.e., extremely poor gas barrier properties.

(Examples 10 to 37, Comparative Examples 4 to 9)

Next, the rubber compositions were prepared using butyl-based rubber and evaluated.

With formulations shown in Tables 2 to 8 and preparation methods described below, the rubber compositions were prepared.

In Table 2 and Tables 4 to 8, the rubber compositions were prepared by the rubber master batch employing the methods described below. In Tables 2 to 8, "Yes" of WMB means that the rubber composition was prepared by using the rubber master batch, and "-" of the WMB means that the rubber composition was prepared by regular machine-milling, i.e., without using the rubber master batch (Table 3).

<Preparation of Rubber Master Batch and Rubber Compositions>

As samples of "Yes" of WMB in each table, the rubber compositions were prepared by preparing the rubber master batch containing the rubber component (modified conjugated diene-based polymer and butyl-based rubber) and the layered compound in a manner described below and then kneading the remaining compounding agents in Tables 2 and 4 to 8 by the Plasto mill.

[Production of Rubber Master Batch: Each formulation at parts by mass in each Table]

Each conjugated diene-based polymer in Tables 2 and 4 to 8 was dissolved in toluene (W1). The layered compound was dispersed in toluene and mixed into the above W1. A mixture thus obtained was stirred at 100°C for 6 hours (W2). Butyl-based rubber of Tables 2 and 4 to 8 was dissolved in toluene, and a mixture thus obtained was stirred at 100°C. Then, the solvent was removed from the mixture to obtain the rubber master batch.

Also, as the samples with "-" of the WMB, the rubber compositions were prepared by kneading the rubber component (modified conjugated diene-based polymer and butyl-based rubber), the layered compound, and each compounding agent in Table 3 by the Plasto mill.

Air permeability B of the rubber compositions thus obtained were evaluated in the following manner.

"Air Permeability B (Gas-barrier properties)"

The rubber compositions described above were vulcanized at 150°C for 30 minutes, and the air permeability B of the resulting products were measured in the following manner. By using an air permeation tester M-C1 (manufactured by Toyo Seiki Sheisaku-Sho, Ltd.), the air permeability of each of the rubber compositions was measured at 60°C. Relative to the air permeability of the rubber composition of Comparative Example 6 represented by 1, the air permeability of the rubber compositions are shown as an index in Tables 2 to 8. A smaller index indicates lower air permeability, i.e., better gas-barrier properties.

[Table 2]

| | | Example 10 | Example 11 | Example 12 | Example 13 | Example 14 | Example 15 | Example 16 | Comparative Example 4 | Comparative Example 5 | Comparative Example 6 |
|---|---|---|---|---|---|---|---|---|---|---|---|
| Formulation (partsby mass) | Butyl-based Rubber (Y) | Br-IIR | Br-IIR | Br-IIR | Br-IIR | Br-IIR | Br-IIR | Br-IIR | Br-IIR | Br-IIR | Br-IIR |
| | Modified Conjugated Diene-based Copolymer (X) | Modified SBR-1 | Modified SBR-1 | Modified SBR-1 | Modified SBR-1 | Modified SBR-1 | Modified SBR-1 | Modified SBR-1 | - | - | - |
| | Butyl-based Rubber (Y)/ Modified Conjugated Diene-based Copolymer (X) [mass ratio] | 95/5 | 80/20 | 60/40 | 95/5 | 95/5 | 80/20 | 60/40 | 100/0 | 100/0 | 100/0 |
| | Layered Compound A | 5 | 5 | 5 | 20 | 60 | 60 | 60 | 5 | 60 | |
| | Stearic Acid *1 | 2 | 2 | 2 | 2 | 2 | 2 | 2 | 2 | 2 | 2 |
| | Zinc Oxide *2 | 2 | 2 | 2 | 2 | 2 | 2 | 2 | 2 | 2 | 2 |
| | Vulcanization Accelerator A *3 | 0.4 | 0.4 | 0.4 | 0.4 | 0.4 | 0.4 | 0.4 | 0.4 | 0.4 | 0.4 |
| | Vulcanization Accelerator B *4 | 0.3 | 0.3 | 0.3 | 0.3 | 0.3 | 0.3 | 0.3 | 0.3 | 0.3 | 0.3 |
| | Vulcanization Accelerator C *5 | 0.8 | 0.8 | 0.8 | 0.8 | 0.8 | 0.8 | 0.8 | 0.8 | 0.8 | 0.8 |
| | Sulfur *6 | 1.3 | 1.3 | 1.3 | 1.3 | 1.3 | 1.3 | 1.3 | 1.3 | 1.3 | 1.3 |
| | Presence of Master Batch (WMB) | Yes | Yes | Yes | Yes | Yes | Yes | Yes | Yes | Yes | |

(continued)

| | | Example 10 | Example 11 | Example 12 | Example 13 | Example 14 | Example 15 | Example 16 | Comparative Example 4 | Comparative Example 5 | Comparative Example 6 |
|---|---|---|---|---|---|---|---|---|---|---|---|
| Evaluation | Air Permeability, B (index) | 0.90 | 0.82 | 0.79 | 0.39 | 0.40 | 0.36 | 0.22 | 0.95 | 0.52 | 1.00 |

[Table 3]

| | | Example 17 | Example 18 | Example 19 | Example 20 | Example 21 | Example 22 | Example 23 | Comparative Example 7 | Comparative Example 8 | Comparative Example 6 |
|---|---|---|---|---|---|---|---|---|---|---|---|
| Formulation (parts by mass) | Butyl-based Rubber (Y) | Br-IIR | Br-IIR | Br-IIR | Br-IIR | Br-IIR | Br-IIR | Br-IIR | Br-IIR | Br-IIR | Br-IIR |
| | Modified Conjugated Diene-based Copolymer (X) | Modified SBR-1 | Modified SBR-1 | Modified SBR-1 | Modified SBR-1 | Modified SBR-1 | Modified SBR-1 | Modified SBR-1 | - | - | - |
| | Butyl-based Rubber (Y)/ Modified Conjugated Diene-based Copolymer (X) [mass ratio] | 95/5 | 80/20 | 60/40 | 95/5 | 95/5 | 80/20 | 60/40 | 100/0 | 100/0 | 100/0 |
| | Layered Compound A | 5 | 5 | 5 | 20 | 60 | 60 | 60 | 5 | 60 | - |
| | Stearic Acid *1 | 2 | 2 | 2 | 2 | 2 | 2 | 2 | 2 | 2 | 2 |
| | Zinc Oxide *2 | 2 | 2 | 2 | 2 | 2 | 2 | 2 | 2 | 2 | 2 |
| | Vulcanization Accelerator A *3 | 0.4 | 0.4 | 0.4 | 0.4 | 0.4 | 0.4 | 0.4 | 0.4 | 0.4 | 0.4 |
| | Vulcanization Accelerator B *4 | 0.3 | 0.3 | 0.3 | 0.3 | 0.3 | 0.3 | 0.3 | 0.3 | 0.3 | 0.3 |
| | Vulcanization Accelerator C *5 | 0.8 | 0.8 | 0.8 | 0.8 | 0.8 | 0.8 | 0.8 | 0.8 | 0.8 | 0.8 |
| | Sulfur *6 | 1.3 | 1.3 | 1.3 | 1.3 | 1.3 | 1.3 | 1.3 | 1.3 | 1.3 | 1.3 |
| | Presence of Master Batch (WMB) | - | - | - | - | - | - | - | - | - | - |

(continued)

| | | Example 17 | Example 18 | Example 19 | Example 20 | Example 21 | Example 22 | Example 23 | Comparative Example 7 | Comparative Example 8 | Comparative Example 6 |
|---|---|---|---|---|---|---|---|---|---|---|---|
| Evaluation | Air Permeability B (index) | 0.93 | 0.88 | 0.85 | 0.60 | 0.47 | 0.41 | 0.32 | 0.98 | 0.58 | 1.00 |

[Table 4]

| | | Example 24 | Example 25 | Example 26 | Comparative Example 9 |
|---|---|---|---|---|---|
| Formulation (parts by mass) | Butyl-based Rubber (Y) | IIR | IIR | IIR | IIR |
| | Modified Conjugated Diene-based Copolymer (X) | Modified SBR-1 | Modified SBR-1 | Modified SBR-1 | - |
| | Butyl-based Rubber (Y)/Modified Conjugated Diene-based Copolymer (X) [mass ratio] | 95/5 | 80/20 | 60/40 | 100/0 |
| | Layered Compound A | 60 | 60 | 60 | 60 |
| | Stearic Acid *1 | 2 | 2 | 2 | 2 |
| | Zinc Oxide *2 | 2 | 2 | 2 | 2 |
| | Vulcanization Accelerator A *3 | 0.4 | 0.4 | 0.4 | 0.4 |
| | Vulcanization Accelerator B *4 | 0.3 | 0.3 | 0.3 | 0.3 |
| | Vulcanization Accelerator C *5 | 0.8 | 0.8 | 0.8 | 0.8 |
| | Sulfur *6 | 1.3 | 1.3 | 1.3 | 1.3 |
| | Presence of Master Batch (WMB) | Yes | Yes | Yes | Yes |
| Evaluation | Air Permeability B (index) | 0.50 | 0.43 | 0.40 | 0.58 |

[Table 5]

| | | Example 27 | Example 28 | Example 29 | Comparative Example 5 |
|---|---|---|---|---|---|
| Formulation (parts by mass) | Butyl-based Rubber (Y) | Br-IIR | Br-IIR | Br-IIR | Br-IIR |
| | Modified Conjugated Diene-based Copolymer (X) | Modified SBR-2 | Modified SBR-2 | Modified SBR-2 | - |
| | Butyl-based rubber (Y)/Modified Conjugated Diene-based Copolymer (X) [mass ratio] | 95/5 | 80/20 | 60/40 | 100/0 |
| | Layered Compound A | 60 | 60 | 60 | 60 |
| | Stearic Acid *1 | 2 | 2 | 2 | 2 |
| | Zinc Oxide *2 | 2 | 2 | 2 | 2 |
| | Vulcanization Accelerator A *3 | 0.4 | 0.4 | 0.4 | 0.4 |
| | Vulcanization Accelerator B *4 | 0.3 | 0.3 | 0.3 | 0.3 |
| | Vulcanization Accelerator C *5 | 0.8 | 0.8 | 0.8 | 0.8 |
| | Sulfur *6 | 1.3 | 1.3 | 1.3 | 1.3 |
| | Presence of Master Batch (WMB) | Yes | Yes | Yes | Yes |
| Evaluation | Air Permeability B (index) | 0.41 | 0.38 | 0.21 | 0.52 |

[Table 6]

| | | Example 30** | Example 31** | Example 32** | Comparative Example 5 |
|---|---|---|---|---|---|
| Formulation (parts by mass) | Butyl-based Rubber (Y) | Br-IIR | Br-IIR | Br-IIR | Br-IIR |
| | Modified Conjugated Diene-based Copolymer (X) | Modified SBR-3 | Modified SBR-3 | Modified SBR-3 | |
| | Butyl-based Rubber (Y)/Modified Conjugated Diene-based Copolymer (X) [mass ratio] | 95/5 | 80/20 | 60/40 | 100/0 |
| | Layered Compound A | 60 | 60 | 60 | 60 |
| | Stearic Acid *1 | 2 | 2 | 2 | 2 |
| | Zinc Oxide *2 | 2 | 2 | 2 | 2 |
| | Vulcanization Accelerator A *3 | 0.4 | 0.4 | 0.4 | 0.4 |
| | Vulcanization Accelerator B *4 | 0.3 | 0.3 | 0.3 | 0.3 |
| | Vulcanization Accelerator C *5 | 0.8 | 0.8 | 0.8 | 0.8 |
| | Sulfur *6 | 1.3 | 1.3 | 1.3 | 1.3 |
| | Presence of Master Batch (WMB) | Yes | Yes | Yes | Yes |
| I Evaluation | Air Permeability B (index) | 0.40 | 0.35 | 0.25 | 0.52 |
| ** Reference Example | | | | | |

[Table 7]

| | | Example 33 | Example 34 | Example 35 | Comparative Example 5 |
|---|---|---|---|---|---|
| Formulation (parts by mass) | Butyl-based Rubber (Y) | Br-IIR | Br-IIR | Br-IIR | Br-IIR |
| | Modified Conjugated Diene-based Copolymer (X) | Modified BR-1 | Modified BR-1 | Modified BR-1 | - |
| | Butyl-based Rubber (Y)/Modified Conjugated Diene-based Copolymer (X) [mass ratio] | 95 / 5 | 80 / 20 | 60 / 40 | 100 / 0 |
| | Layered Compound A | 60 | 60 | 60 | 60 |
| | Stearic Acid *1 | 2 | 2 | 2 | 2 |
| | Zinc Oxide *2 | 2 | 2 | 2 | 2 |
| | Vulcanization Accelerator A *3 | 0.4 | 0.4 | 0.4 | 0.4 |
| | Vulcanization Accelerator B *4 | 0.3 | 0.3 | 0.3 | 0.3 |
| | Vulcanization Accelerator C *5 | 0.8 | 0.8 | 0.8 | 0.8 |
| | Sulfur *6 | 1.3 | 1.3 | 1.3 | 1.3 |
| | Presence of Master Batch (WMB) | Yes | Yes | Yes | Yes |
| Evaluation | Air Permeability B (index) | 0.48 | 0.43 | 0.38 | 0.52 |

[Table 8]

| | | Example 36 | Example 37 |
|---|---|---|---|
| Formulation (parts by mass) | Butyl-based Rubber (Y) | Br-IIR | Br-IIR |
| | Modified Conjugated Diene-based Copolymer (X) | Modified SBR-1 | Modified SBR-1 |
| | Butyl-based Rubber (Y)/Modified Conjugated Diene-based Copolymer (X) [mass ratio] | 95/5 | 95/5 |
| | Layered Compound A | 20 | 20 |
| | Stearic Acid *1 | 2 | 2 |
| | Zinc Oxide *2 | 2 | 2 |
| | Vulcanization Accelerator A *3 | 0.4 | 0.4 |
| | Vulcanization Accelerator B *4 | 0.3 | 0.3 |
| | Vulcanization Accelerator C *5 | 0.8 | 0.8 |
| | Sulfur *6 | 1.3 | 1.3 |
| | Presence of Master Batch (WMB) | Yes | - |
| Evaluation | Air Permeability B (index) | 0.4 | 0.6 |

As apparent from results in Tables 2 to 5, 7 and 8, the rubber compositions of Examples 10 to 29 and 33 to 37 using the modified conjugated diene-based polymer, the layered compounds, and butyl-based rubber have much lower air permeability, i.e., extremely superior gas-barrier properties, in comparison to rubber compositions of Comparative Examples 4 to 9 respectively corresponding, which are outside the scope of the disclosure herein. Also, the rubber compositions of each Examples in Table 2 and Tables 4, 5 and 7 obtained by kneading the rubber master batch containing the modified conjugated diene-based polymer, butyl-based rubber, and the layered compound together with the compounding agent have further superior gas barrier properties in comparison to the rubber compositions of each Examples in Table 3 prepared with the modified conjugated diene-based polymer, butyl-based rubber, the layered compound, and the compounding agent without using the rubber master batch.

Looking at Comparative Examples individually, Comparative Examples 4, 5, and 7 to 9, did not use the modified conjugated diene-based polymer (0 parts by mass: 0 phr), and thus butyl-based rubber alone with the layered compound of each parts by mass (5 to 60 parts by mass) was evaluated. As Comparative Example 6, the butyl-based rubber using no layered compound was evaluated. In these cases, the gas barrier properties were far inferior to that of Examples in Tables 2 to 7.

INDUSTRIAL APPLICABILITY

The disclosed products are useful for rubber members of various rubber products, especially the rubber composition of the inner liner for the pneumatic tire, the inner liner material, and the pneumatic tire using the inner liner.

## Claims

**1.** A rubber composition comprising a layered compound, and a modified conjugated diene-based polymer having a functional group that interacts with the layered compound,
wherein the layered compound is a layered clay mineral, layered polysilicate, or zirconium phosphate,
wherein the modified conjugated diene-based polymer is produced by having the active site of the conjugated diene-based polymer obtained by the anionic polymerization or coordination polymerization react with a modifying agent, and
wherein the modifying agent is a hydrocarbyloxy silane compound having a protected primary amino group, bis (diethylamino) benzophenone, 1,3-dimethyl-2-imidazolidinone, N-methylpyrrolidone, 4-dimethylamino benzylidene aniline, a hydrocarbyloxy silane compound containing a (thio) epoxy group, a hydrocarbyloxy silane compound containing imine residue, a hydrocarbyloxy silane compound containing imidazole residue, a hydrocarbyloxy silane compound containing carboxylic acid hydrocarbyl ester residue, a hydrocarbyloxy silane compound containing an

isocyanate group, or a hydrocarbyloxy silane compound containing carboxylic acid anhydride residue.

2. The rubber composition according to claim 1, wherein the functional group that interacts with the layered compound is at least one of a nitrogen-containing functional group or an oxygen-containing functional group.

3. The rubber composition according to claim 2, wherein the nitrogen-containing functional group is at least one selected from a group composed of a substituted or unsubstituted amino group, a substituted or unsubstituted amide group, and a substituted or unsubstituted imino group, and the oxygen-containing functional group is a substituted or unsubstituted alkoxy silyl group.

4. The rubber composition according to any one of claims 1 to 3, further comprising a butyl-based rubber.

5. The rubber composition according to claim 4, wherein the butyl-based rubber is selected from 1) butyl rubber, 2) halogenated butyl rubber, and 3) a copolymer obtained by polymerizing (a) isobutylene and (b) a vinyl compound containing a halogen group with a cationic polymerization initiator, or a copolymer obtained by polymerizing (a) isobutylene, (b) the vinyl compound containing the halogen group or (a) isobutylene, (c) an aromatic vinyl compound containing the halogen group, and (d) a vinyl compound having no halogen group with a cationic polymerization initiator.

6. The rubber composition according to claim 5, wherein a blend ratio (Y/X) of the modified conjugated diene-based polymer (X) and the butyl-based rubber (Y) is 99.5/0.5 to 40/60.

7. The rubber composition according to any one of claims 1 to 6,
wherein the layered compound is at least one selected from a group composed of kaolin mineral, serpentine, pyrophyllite-talc, mica, chlorite, smectite, and vermiculite.

8. The rubber composition according to any one of claims 1 to 6,
wherein the layered compound is at least one selected from a group composed of montmorillonite, mica, vermiculite, beidellite, nontronite, saponite, hectorite, and stevensite.

9. The rubber composition according to any one of claims 1 to 6,
wherein the layered compound is mica and/or montmorillonite.

10. The rubber composition according to any one of claims 1 to 9,
wherein the layered compound is organized with an organizing agent, wherein the organizing agent contains at least one of quaternary ammonium cations having the structure represented by the following formula (1)

[Formula 1]

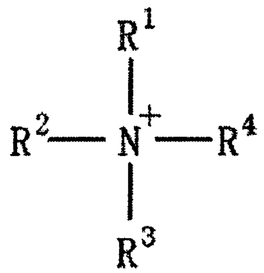

· · · (1)

or quaternary phosphonium cations having the structure represented by the following formula (2)

[Formula 2]

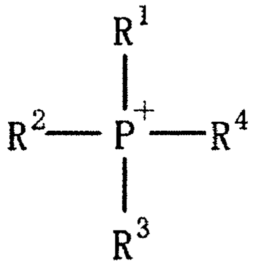

· · · (2)

(where $R^1$ to $R^4$ each independently represent an aryl group, an alkyl group having a carbon number of 1 to 30, a $(CH_2CH(CH_3)O)_nH$ group, or a $(CH_2CH_2O)_nH$ group, and n represents an integer of 1 to 50).

**11.** The rubber composition according to any one of claims 1 to 10, wherein the interaction is hydrogen bonding.

**12.** The rubber composition according to any one of claims 1 to 11, wherein the rubber composition is a rubber master batch obtained by mixing a rubber component and the layered compound into water and/or an organic solvent and removing the water and/or the organic solvent therefrom.

**13.** An inner liner material made of the rubber composition according to any one of claims 1 to 12.

**14.** A pneumatic tire having an inner liner formed with the inner liner material according to claim 13.

**Patentansprüche**

**1.** Kautschukzusammensetzung, umfassend eine Schichtverbindung und ein modifiziertes konjugiertes Dien-basiertes Polymer mit einer funktionellen Gruppe, welche mit der Schichtverbindung wechselwirkt,
wobei die Schichtverbindung ein Schicht-Tonmineral, ein Schicht-Polysilicat, oder Zirkoniumphosphat ist,
wobei das modifizierte konjugierte Dien-basierte Polymer hergestellt wird, indem es die aktive Stelle des konjugierten Dien-basierten Polymers aufweist, erhalten durch die anionische Polymerisations- oder Koordinationspolymerisationsreaktion mit einem Modifizierungsmittel, und wobei das Modifizierungsmittel eine Hydrocarbyloxysilanverbindung mit einer geschützten primären Aminogruppe, Bis(diethylamino)benzophenon, 1,3-Dimethyl-2-imidazolidinon, N-Methylpyrrolidon, 4-Dimethylaminobenzylidenanilin, eine Hydrocarbyloxysilanverbindung enthaltend eine (Thio)epoxygruppe, eine Hydrocarbyloxysilanverbindung enthaltend einen Imin-Rest, eine Hydrocarbyloxysilanverbindung enthaltend einen Imidazol-Rest, eine Hydrocarbyloxysilanverbindung enthaltend einen Carbonsäure-Hydrocarbylester-Rest, eine Hydrocarbyloxysilanverbindung enthaltend eine Isocyanat-Gruppe, oder eine Hydrocarbyloxysilanverbindung enthaltend einen Carbonsäureanhydrid-Rest ist.

**2.** Kautschukzusammensetzung gemäß Anspruch 1, wobei die funktionelle Gruppe, welche mit der Schichtverbindung wechselwirkt, wenigstens eine von einer stickstoffhaltigen funktionellen Gruppe oder einer sauerstoffhaltigen funktionellen Gruppe ist.

**3.** Kautschukzusammensetzung gemäß Anspruch 2, wobei die stickstoffhaltige funktionelle Gruppe wenigstens eine ausgewählt aus einer Gruppe zusammengesetzt aus einer substituierten oder unsubstituierten Aminogruppe, einer substituierten oder unsubstituierten Amidgruppe und einer substituierten oder unsubstituierten Iminogruppe ist, und die sauerstoffhaltige funktionelle Gruppe eine substituierte oder unsubstituierte Alkoxysilylgruppe ist.

**4.** Kautschukzusammensetzung gemäß irgendeinem der Ansprüche 1 bis 3, weiterhin umfassend einen Butyl-basierten Kautschuk.

**5.** Kautschukzusammensetzung gemäß Anspruch 4, wobei der Butyl-basierte Kautschuk ausgewählt ist aus 1) Butylkautschuk, 2) halogeniertem Butylkautschuk, und 3) einem Copolymer erhalten durch Polymerisieren von (a) Isobutylen und (b) einer Vinylverbindung enthaltend eine Halogengruppe mit einem kationischen Polymerisationsinitiator, oder einem Copolymer erhalten durch Polymerisieren von (a) Isobutylen, (b) der Vinylverbindung enthaltend

die Halogengruppe oder (a) Isobutylen, (c) einer aromatischen Vinylverbindung enthaltend die Halogengruppe, und (d) einer Vinylverbindung mit keiner Halogengruppe mit einem kationischen Polymerisationsinitiator.

6. Kautschukzusammensetzung gemäß Anspruch 5, wobei ein Mischverhältnis (Y/X) des modifizierten konjugierten Dien-basierte Polymers (X) und des Butyl-basierten Kautschuks (Y) 99.5/0.5 bis 40/60 beträgt.

7. Kautschukzusammensetzung gemäß irgendeinem der Ansprüche 1 bis 6, wobei die Schichtverbindung wenigstens eine ausgewählt aus einer Gruppe zusammengesetzt aus Kaolinmineral, Serpentin, Pyrophyllit-Talk, Glimmer (Mica), Chlorit, Smectit, und Vermiculit ist.

8. Kautschukzusammensetzung gemäß irgendeinem der Ansprüche 1 bis 6, wobei die Schichtverbindung wenigstens eine ausgewählt aus einer Gruppe zusammengesetzt aus Montmorillonit, Glimmer (Mica), Vermiculit, Beidellit, Nontronit, Saponit, Hectorit, und Stevensit ist.

9. Kautschukzusammensetzung gemäß irgendeinem der Ansprüche 1 bis 6, wobei die Schichtverbindung Glimmer (Mica) und/oder Montmorillonit ist.

10. Kautschukzusammensetzung gemäß irgendeinem der Ansprüche 1 bis 9, wobei die Schichtverbindung mit einem Organisierungsmittel organisiert ist, wobei das Organisierungsmittel wenigstens eines enthält von quartären Ammoniumkationen mit der Struktur dargestellt durch die folgende Formel (1)

[Formel 1]

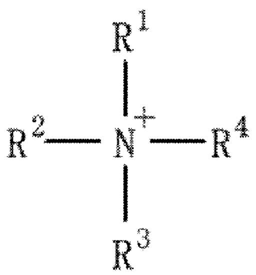

· · · (1)

oder von quartären Phosphoniumkationen mit der Struktur dargestellt durch die folgende Formel (2)

[Formel 2]

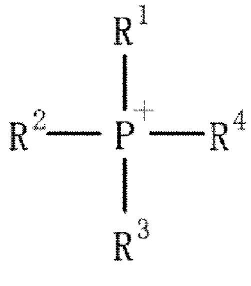

· · · (2)

(wobei $R^1$ bis $R^4$ jeweils unabhängig eine Arylgruppe, eine Alkylgruppe mit einer Kohlenstoffzahl von 1 bis 30, eine $(CH_2CH(CH_3)O)_nH$-Gruppe, oder eine $(CH_2CH_2O)_nH$-Gruppe darstellen, und n eine ganze Zahl von 1 bis 50 darstellt).

11. Kautschukzusammensetzung gemäß irgendeinem der Ansprüche 1 bis 10, wobei die Wechselwirkung Wasserstoffbrückenbindung ist.

12. Kautschukzusammensetzung gemäß irgendeinem der Ansprüche 1 bis 11, wobei die Kautschukzusammensetzung ein Kautschuk-Masterbatch ist, erhalten durch Vermischen einer Kautschukkomponente und der Schichtverbindung in Wasser und/oder ein organisches Lösungsmittel und Entfernen des Wassers und/oder des organischen Lösungsmittels davon.

13. Innenauskleidungsmaterial, hergestellt aus der Kautschukzusammensetzung gemäß irgendeinem der Ansprüche 1 bis 12.

14. Luftreifen mit einer Innenauskleidung, gebildet mit dem Innenauskleidungsmaterial gemäß Anspruch 13.

## Revendications

1. Composition de caoutchouc comprenant un composé lamellaire et un polymère à base de diène conjugué modifié, comportant un groupe fonctionnel qui interagit avec le composé lamellaire,
dans laquelle le composé lamellaire est un minéral argileux lamellaire, un polysilicate lamellaire, ou le phosphate de zirconium,
dans laquelle le polymère à base de diène conjugué modifié est produit par la réaction, avec un agent modifiant, du site actif du polymère à base de diène conjugué, obtenu par la polymérisation anionique ou la polymérisation par coordination, et
dans laquelle l'agent modifiant est un composé hydrocarbyloxysilane comportant un groupe amino primaire protégé, la bis(diéthylamino)benzophénone, la 1,3-diméthyl-2-imidazolidinone, la N-méthylpyrrolidone, la 4-diméthylamino-benzylidène-aniline, un composé hydrocarbyloxysilane contenant un groupe (thio)époxy, un composé hydrocarbyloxysilane contenant un résidu imine, un composé hydrocarbyloxysilane contenant un résidu imidazole, un composé hydrocarbyloxysilane contenant un résidu ester hydrocarbylique d'un acide carboxylique, un composé hydrocarbyloxysilane contenant un groupe isocyanate, ou un groupe hydrocarbyloxysilane contenant un résidu anhydride carboxylique.

2. Composition de caoutchouc selon la revendication 1,
dans laquelle le groupe fonctionnel qui interagit avec le composé lamellaire est au moins l'un d'un groupe fonctionnel azoté ou d'un groupe fonctionnel oxygéné.

3. Composition de caoutchouc selon la revendication 2,
dans laquelle le groupe fonctionnel azoté est au moins l'un choisi dans un groupe composé d'un groupe amino substitué ou non substitué, d'un groupe amide substitué ou non substitué, et d'un groupe imino substitué ou non substitué, et le groupe fonctionnel oxygéné est un groupe alcoxysilyle substitué ou non substitué.

4. Composition de caoutchouc selon l'une quelconque des revendications 1 à 3, comprenant en outre un caoutchouc à base de butyle.

5. Composition de caoutchouc selon la revendication 4,
dans laquelle le caoutchouc à base de butyle est choisi parmi 1) le caoutchouc butyle, 2) le caoutchouc butyle halogéné, et 3) un copolymère obtenu par polymérisation, à l'aide d'un amorceur de polymérisation cationique, (a) d'isobutylène et (b) d'un composé vinylique contenant un groupe halogéno, ou un copolymère obtenu par polymérisation, à l'aide d'un amorceur de polymérisation cationique, (a) d'isobutylène, (b) du composé vinylique contenant le groupe halogéno ou (a) d'isobutylène, (c) d'un composé vinylaromatique contenant le groupe halogéno, et (d) d'un composé vinylique ne comportant pas de groupe halogéno.

6. Composition de caoutchouc selon la revendication 5,
dans laquelle le rapport de mélange (Y/X) du polymère à base de diène conjugué modifié (X) et du caoutchouc à base de butyle (Y) est de 99,5/0,5 à 40/60.

7. Composition de caoutchouc selon l'une quelconque des revendications 1 à 6, dans laquelle le composé lamellaire est au moins l'un choisi dans un groupe consistant en un minéral de type kaolin, la serpentine, le pyrophyllite-talc, le mica, la chlorite, la smectite et la vermiculite.

8. Composition de caoutchouc selon l'une quelconque des revendications 1 à 6, dans laquelle le composé lamellaire est au moins l'un choisi dans le groupe consistant en la montmorillonite, le mica, la vermiculite, la beidellite, la nontronite, la saponite, l'hectorite et la stevensite.

9. Composition de caoutchouc selon l'une quelconque des revendications 1 à 6, dans laquelle le composé lamellaire est le mica et/ou la montmorillonite.

**10.** Composition de caoutchouc selon l'une quelconque des revendications 1 à 9, dans laquelle le composé lamellaire est organisé avec un agent d'organisation, l'agent d'organisation contenant au moins l'un de cations ammonium quaternaire ayant la structure représentée par la formule (1) ci-après :

[Formule 1]

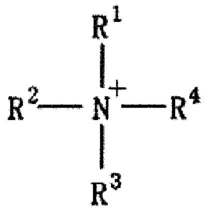

· · · (1)

ou de cations phosphonium quaternaire ayant la structure représentée par la formule (2) ci-après :

[Formule 2]

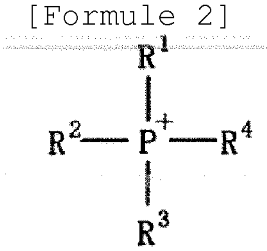

· · · (2)

(dans lesquelles $R^1$ à $R^4$ représentent chacun indépendamment des autres un groupe aryle, un groupe alkyle ayant 1 à 30 atomes de carbone, un groupe $(CH_2CH(CH_3)O)_nH$ ou un groupe $(CH_2CH_2O)_nH$, et n représente un entier de 1 à 50).

**11.** Composition de caoutchouc selon l'une quelconque des revendications 1 à 10, dans laquelle l'interaction est une liaison hydrogène.

**12.** Composition de caoutchouc selon l'une quelconque des revendications 1 à 11, dans laquelle la composition de caoutchouc est un mélange-maître de caoutchouc obtenu par mélange d'un constituant caoutchouc et du composant lamellaire dans de l'eau et/ou dans un solvant organique, et élimination, de ce dernier, de l'eau et/ou du solvant organique.

**13.** Matériau pour calandrage intérieur, fabriqué en la composition de caoutchouc selon l'une quelconque des revendications 1 à 12.

**14.** Pneumatique, comprenant un calandrage intérieur formé avec le matériau pour calandrage intérieur selon la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6034164 A